(19) Europäisches Patentamt / European Patent Office / Office européen des brevets

(11) **EP 4 765 940 A1**

(12) **EUROPEAN PATENT APPLICATION**
published in accordance with Art. 153(4) EPC

(43) Date of publication:
**24.06.2026   Bulletin 2026/26**

(21) Application number: **24876271.8**

(22) Date of filing: **21.08.2024**

(51) International Patent Classification (IPC):
**H04W 28/02** (2009.01)

(52) Cooperative Patent Classification (CPC):
**H04W 28/02**

(86) International application number:
**PCT/CN2024/113514**

(87) International publication number:
**WO 2025/077451 (17.04.2025 Gazette 2025/16)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **12.10.2023   CN 202311323296**

(71) Applicant: HUAWEI TECHNOLOGIES CO., LTD.
**Shenzhen 518129 (CN)**

(72) Inventors:
• TAN, Zhiyuan
  **Shenzhen, Guangdong 518129 (CN)**
• CAO, Youlong
  **Shenzhen, Guangdong 518129 (CN)**
• QIN, Yi
  **Shenzhen, Guangdong 518129 (CN)**

(74) Representative: **MERH-IP Matias Erny Reichl Hoffmann**
**Patentanwälte PartG mbB**
**Paul-Heyse-Straße 29**
**80336 München (DE)**

(54)   **METHOD FOR REPORTING BUFFER STATE REPORT AND RELATED DEVICE**

(57)   A method and a related device for reporting a buffer state report are disclosed to improve performance of BSR-based uplink scheduling. In the method, a terminal device generates a BSR, where the BSR includes first information and second information, the first information indicates a buffered data amount of an LCG, the buffered data amount of the LCG is related to a data amount of system information in the LCG and a data amount of redundant information in the LCG, and the redundant information is generated based on the system information. The second information indicates any one of the following: the data amount of the system information, the data amount of the redundant information, a ratio of the data amount of the system information to the buffered data amount of the LCG, a ratio of the data amount of the redundant information to the buffered data amount of the LCG, a ratio of the data amount of the system information to a sum of the data amount of the system information and the data amount of the redundant information, and a ratio of the data amount of the redundant information to the sum of the data amount of the system information and the data amount of the redundant information. The terminal device reports the BSR.

FIG. 5

## Description

This application claims priority to Chinese Patent Application No. 202311323296.6, filed with the China National Intellectual Property Administration on October 12, 2023 and entitled "METHOD AND RELATED DEVICE FOR REPORTING BUFFER STATE REPORT", which is incorporated herein by reference in its entirety.

## TECHNICAL FIELD

This application relates to the field of wireless communication technologies, and in particular, to a method and a related device for reporting a buffer state report (buffer state report, BSR).

## BACKGROUND

Wireless communication refers to transmission between two or more communication nodes without the use of conductors or cables or via an air interface. For example, communication nodes include a network device and a terminal device. Generally, the terminal device may access the network device, and receive scheduling and indication information from the network device to implement wireless communication.

Currently, due to limited uplink communication resources, the terminal device usually needs to obtain uplink communication resources through a resource request process. For example, the terminal device may report a buffer state report (buffer state report, BSR) to the network device, indicating the amount of uplink resources it requests. Upon receiving a resource indication scheduled based on the BSR from the network device, the terminal device may perform uplink transmission according to the resource indication.

However, how to improve performance of BSR-based uplink scheduling is a pressing technical challenge.

## SUMMARY

This application provides a communication method and a related device to improve performance of BSR-based uplink scheduling.

A first aspect of this application provides a communication method. The method is performed by a terminal device, or the method is performed by a module (for example, a processor, a chip, or a chip system) of a terminal device, or the method may be implemented by a logical node, a logical module, or software that can implement all or some functions of a terminal device. In the first aspect and possible implementations of the first aspect, an example in which the communication method is performed by the terminal device is used for description. In the method, the terminal device generates a BSR, where the BSR includes first information and second information, the first information indicates a buffered data amount of a logical channel group (logical channel group, LCG), the buffered data amount of the LCG is related to a data amount of system information in the LCG and a data amount of redundant information in the LCG, the redundant information is generated based on the system information, and the second information indicates any one of the following: the data amount of the system information, the data amount of the redundant information, a ratio of the data amount of the system information to the buffered data amount of the LCG, a ratio of the data amount of the redundant information to the buffered data amount of the LCG, a ratio of the data amount of the system information to a sum of the data amount of the system information and the data amount of the redundant information, and a ratio of the data amount of the redundant information to the sum of the data amount of the system information and the data amount of the redundant information. The terminal device reports the BSR.

Based on the foregoing technical solutions, the BSR reported by the terminal device includes the first information and the second information, the first information indicates the buffered data amount of the LCG, and the second information indicates any one of the foregoing items. Upon receiving the BSR, a network device may determine, based on the BSR, both the data amount of the system information in the LCG and the data amount of the redundant information in the LCG. Because the network device may be capable of recovering complete system information even if the terminal device does not send the redundant information, a resource indicated by a resource indication subsequently sent by the network device based on the BSR may not need to include a resource used to carry the redundant information. Compared with an approach in which the network device learns the buffered data amount of the LCG based on the BSR and performs uplink scheduling on buffered data of the LCG, the foregoing technical solutions, by having the terminal device send the BSR that includes the first information and the second information, enable the network device to determine both the data amount of the system information in the LCG and the data amount of the redundant information in the LCG based on the BSR, allowing it to schedule uplink transmission of the system information based on the BSR. This improves performance of BSR-based uplink scheduling.

In addition, because the network device may be capable of recovering the complete system information even if the terminal device does not send the redundant information, and considering the constraints of uplink resources, by having the terminal device send the BSR that includes the first information and the second information, the network device can avoid scheduling the resource used to carry the redundant information. This increases a quantity of terminal devices (or referred to as a quantity of users) scheduled by the network device based on the BSR, thereby improving multi-user scheduling performance.

It should be understood that the terminal device may indicate the buffered data amount of the LCG by using the first information in the BSR. Accordingly, the network device may determine the buffered data amount of the LCG based on the first information. In addition, the buffered data amount that is of the LCG and that is indicated by the first information is greater than or equal to an actual buffered data amount of the LCG, and the actual buffered data amount of the LCG is a sum of the data amount of the system information in the LCG and the data amount of the redundant information in the LCG. The first information in the BSR reported by the terminal device may be an index value, and a buffered data amount that is of the LCG and that corresponds to the index value is an upper bound value of the actual buffered data amount of the LCG. For example, the first information may be carried in a buffer size (Buffer Size) field in the BSR.

In other words, that the buffered data amount that is of the LCG and that is indicated by the first information is related to the data amount of the system information in the LCG and the data amount of the redundant information in the LCG may be understood as follows: The buffered data amount that is of the LCG and that is indicated by the first information is greater than or equal to the sum of the data amount of the system information in the LCG and the data amount of the redundant information in the LCG, or the buffered data amount that is of the LCG and that is indicated by the first information is an upper bound value of the sum of the data amount of the system information in the LCG and the data amount of the redundant information in the LCG.

It should be understood that the system information in the LCG may include application data of the terminal device, and the application data is obtained through source coding. For example, application data such as video transmission, cloud gaming (cloud gaming, CG), and extended reality (extended reality, XR) is generated through source coding, where XR includes virtual reality (virtual reality, VR), augmented reality (augmented reality, AR), and mixed reality (mixed reality, MR).

It should be understood that the redundant information in the LCG may be used to improve reliability of uplink transmission of the system information in the LCG. Correspondingly, that the redundant information is generated based on the system information may be understood as follows: The redundant information is redundancy generated through coding based on the system information, where packet-level coding such as network coding (network coding) or fountain code (Fountain Code) is usually used, or based on the system information, the redundant information is redundancy generated by using forward error correction (forward error correction, FEC) code.

In a possible implementation of the first aspect, the method further includes: The terminal device receives first indication information, where the first indication information indicates that the reported BSR includes the second information.

Based on the foregoing technical solutions, the terminal device may further receive the first indication information indicating that the reported BSR includes the second information, so that the terminal device may use the reported BSR to carry the second information based on the first indication information. In this way, the terminal device reports the second information based on scheduling of the network device.

Optionally, the first indication information may be carried in a field in a downlink message/signaling/information. When a value of the field is a first value, a meaning of the field is the first indication information. When the value of the field is a second value, the meaning of the field may be second indication information, and the second indication information indicates that the reported BSR does not include the second information (or the second indication information indicates that the second information is prohibited from being carried in the reported BSR). For example, the first value is 1 and the second value is 0, or the first value is 0 and the second value is 1.

In addition, the first indication information may be carried in a radio resource control (radio resource control, RRC) message, downlink control information (downlink control information, DCI), a media access control control element (media access control control element, MAC CE), or the like. For example, the first indication information is included in BSR configuration (BSR-Config) information in the RRC message.

A second aspect of this application provides a communication method. The method is performed by a network device, or the method is performed by a module (for example, a processor, a chip, or a chip system) of a network device, or the method may be implemented by a logical node, a logical module, or software that can implement all or some functions of a network device. In the second aspect and possible implementations of the second aspect, an example in which the communication method is performed by the network device is used for description. In the method, the network device receives a BSR, where the BSR includes first information and second information, the first information indicates a buffered data amount of an LCG, the buffered data amount of the LCG is related to a data amount of system information in the LCG and a data amount of redundant information in the LCG, the redundant information is generated based on the system information, and the second information indicates any one of the following: the data amount of the system information, the data amount of the redundant information, a ratio of the data amount of the system information to the buffered data amount of the LCG, a ratio of the data amount of the redundant information to the buffered data amount of the LCG, a ratio of the data amount of the system information to a sum of the data amount of the system information and the data amount of the redundant information, and a ratio of the data amount of the redundant information to the sum of the data amount of the system information and the data amount of the redundant information.

Based on the foregoing technical solutions, the BSR received by the network device includes the first information and the second information, the first information indicates the buffered data amount of the LCG, and the second information indicates any one of the foregoing items. Upon receiving the BSR, a network device may determine, based on the BSR, both the data amount of the system information in the LCG and the data amount of the redundant information in the LCG. Because the network device may be capable of recovering complete system information even if the terminal device does not send the redundant information Therefore, a resource indicated by a resource indication subsequently sent by the network device based on the BSR may not need to include a resource used to carry the redundant information. Compared with an approach in which the network device learns the buffered data amount of the LCG based on the BSR and performs uplink scheduling on buffered data of the LCG, the foregoing technical solutions, by having the terminal device send the BSR that includes the first information and the second information, enable the network device to determine both the data amount of the system information in the LCG and the data amount of the redundant information in the LCG based on the BSR, allowing it to schedule uplink transmission of the system information based on the BSR. This improves performance of BSR-based uplink scheduling.

In addition, because the network device may be capable of recovering the complete system information even if the terminal device does not send the redundant information, and considering the constraints of uplink resources, by having the terminal device send the BSR that includes the first information and the second information, the network device can avoid scheduling the resource used to carry the redundant information. This increases a quantity of terminal devices (or referred to as a quantity of users) scheduled by the network device based on the BSR, thereby improving multi-user scheduling performance.

In a possible implementation of the second aspect, the method further includes: The network device sends first indication information, where the first indication information indicates that the reported BSR includes the second information.

Based on the foregoing technical solutions, the network device may further send the first indication information indicating that the reported BSR includes the second information, so that after the terminal device receives the first indication information, the terminal device may use the reported BSR to carry the second information based on the first indication information. In this way, the terminal device reports the second information based on scheduling of the network device.

Optionally, the first indication information is included in BSR configuration information in an RRC message.

In a possible implementation of the first aspect or the second aspect, the LCG is used to carry a protocol data unit (protocol data unit, PDU). The data amount of the system information is a quantity of PDUs corresponding to the system information, and the data amount of the redundant information is a quantity of PDUs corresponding to the redundant information.

It should be understood that the LCG may carry buffered information in a plurality of manners. For example, the LCG may carry the buffered information in a form of PDU. Correspondingly, the system information in the LCG may include one or more PDUs, in other words, the data amount of the system information may be represented by using a quantity of PDUs included in the system information, that is, the data amount of the system information may be the quantity of PDUs corresponding to the system information. Similarly, the redundant information in the LCG may include one or more PDUs, in other words, the data amount of the redundant information may be represented by using a quantity of PDUs included in the redundant information, that is, the data amount of the redundant information may be the quantity of PDUs corresponding to the redundant information.

It should be understood that, in the one or more PDUs included in the system information in the LCG and in the one or more PDUs included in the redundant information in the LCG, sizes of different PDUs are equal or approximately equal.

Based on the foregoing technical solutions, the LCG of the terminal device may be used to carry the PDU, and both the system information and the redundant information may include one or more PDUs. Correspondingly, the data amount that is of the system information and that is indicated by the second information may be the quantity of PDUs corresponding to the system information, and the data amount that is of the redundant information and that is indicated by the second information may be the quantity of PDUs corresponding to the redundant information.

In a possible implementation of the first aspect or the second aspect, the LCG is used to carry a packet, the data amount of the system information is a quantity of packets corresponding to the system information, and the data amount of the redundant information is a quantity of packets corresponding to the redundant information.

It should be understood that the LCG may carry buffered information in a plurality of manners. For example, the LCG may carry the buffered information in a form of packet. Correspondingly, the system information in the LCG may include one or more packets, in other words, the data amount of the system information may be represented by using a quantity of packets included in the system information, that is, the data amount of the system information may be the quantity of packets corresponding to the system information. Similarly, the redundant information in the LCG may include one or more packets, in other words, the data amount of the redundant information may be represented by using a quantity of packets included in the redundant information, that is, the data amount of the redundant information may be the quantity of packets corresponding to the redundant information.

It should be understood that, in the one or more packets included in the system information in the LCG and in the one or more packets included in the redundant information in the LCG, sizes of different packets are equal or approximately equal.

Based on the foregoing technical solutions, the LCG of the terminal device may be used to carry the packet, and both the system information and the redundant information may include one or more packets. Correspondingly, the data amount that is of the system information and that is indicated by the second information may be the quantity of packets corresponding to the system information, and the data amount that is of the redundant information and that is indicated by the second information may be the quantity of packets corresponding to the redundant information.

In a possible implementation of the first aspect or the second aspect, there is one or more LCGs.

Based on the foregoing technical solutions, there may be one or more LCGs, that is, the BSR may include first information and second information that respectively correspond to the one or more LCGs. For example, there are N (N is a positive integer) LCGs. The BSR may include N pieces of first information and N pieces of second information. The N pieces of first information respectively correspond to the N LCGs, and the N pieces of second information respectively correspond to the N LCGs.

For example, when a value of N is 1, the BSR reported by the terminal device may be referred to as a short buffer state report (Short BSR) or a truncated buffer state report (Truncated BSR). When the value of N is greater than 1, the BSR reported by the terminal device may be referred to as a long buffer state report (Long BSR), a long truncated buffer state report (Long Truncated BSR), or a pre-emptive buffer state report (Pre-emptive BSR).

A third aspect of this application provides a communication apparatus. The apparatus is a terminal device, or the apparatus is a module (for example, a processor, a chip, or a chip system) of a terminal device, or the apparatus may be a logical node, a logical module, or software that can implement all or some functions of a terminal device. In the third aspect and possible implementations of the third aspect, an example in which the communication apparatus is the terminal device is used for description. The apparatus includes a processing unit and an interface unit. The processing unit is configured to generate a BSR, where the BSR includes first information and second information, the first information indicates a buffered data amount of an LCG, the buffered data amount of the LCG is related to a data amount of system information in the LCG and a data amount of redundant information in the LCG, the redundant information is generated based on the system information, and the second information indicates any one of the following: the data amount of the system information, the data amount of the redundant information, a ratio of the data amount of the system information to the buffered data amount of the LCG, a ratio of the data amount of the redundant information to the buffered data amount of the LCG, a ratio of the data amount of the system information to a sum of the data amount of the system information and the data amount of the redundant information, and a ratio of the data amount of the redundant information to the sum of the data amount of the system information and the data amount of the redundant information. The interface unit is configured to report the BSR.

In a possible implementation of the third aspect, the LCG is used to carry a PDU, the data amount of the system information is a quantity of PDUs corresponding to the system information, and the data amount of the redundant information is a quantity of PDUs corresponding to the redundant information.

In a possible implementation of the third aspect, the LCG is used to carry a packet, the data amount of the system information is a quantity of packets corresponding to the system information, and the data amount of the redundant information is a quantity of packets corresponding to the redundant information.

In a possible implementation of the third aspect, there is one or more LCGs.

In a possible implementation of the third aspect, the interface unit is further configured to receive first indication information, where the first indication information indicates that the reported BSR includes the second information.

In a possible implementation of the third aspect, the first indication information is included in BSR configuration information in an RRC message.

A fourth aspect of this application provides a communication apparatus. The apparatus is a network device, or the apparatus is a module (for example, a processor, a chip, or a chip system) in a network device, or the apparatus may be a logical node, a logical module, or software that can implement all or some functions of a network device. In the fourth aspect and possible implementations of the fourth aspect, an example in which the communication apparatus is the network device is used for description. The apparatus includes an interface unit. The interface unit is configured to receive a BSR, where the BSR includes first information and second information, the first information indicates a buffered data amount of an LCG, the buffered data amount of the LCG is related to a data amount of system information in the LCG and a data amount of redundant information in the LCG, the redundant information is generated based on the system information, and the second information indicates any one of the following:

the data amount of the system information, the data amount of the redundant information, a ratio of the data amount of the system information to the buffered data amount of the LCG, a ratio of the data amount of the redundant information to the buffered data amount of the LCG, a ratio of the data amount of the system information to a sum of the data amount of the system information and the data amount of the redundant information, and a ratio of the data amount of the redundant information to the sum of the data amount of the system information and the data amount of the redundant information.

In a possible implementation of the fourth aspect, the LCG is used to carry a PDU, the data amount of the system information is a quantity of PDUs corresponding to the system information, and the data amount of the redundant information is a quantity of PDUs corresponding to the redundant information.

In a possible implementation of the fourth aspect, the LCG is used to carry a packet, the data amount of the system information is a quantity of packets corresponding to the system information, and the data amount of the redundant information is a quantity of packets corresponding to the redundant information.

In a possible implementation of the fourth aspect, there is one or more LCGs.

In a possible implementation of the fourth aspect, the interface unit is further configured to send first indication information, where the first indication information indicates that the reported BSR includes the second information.

In a possible implementation of the fourth aspect, the first indication information is included in BSR configuration information in an RRC message.

A fifth aspect of this application provides a communication apparatus, including at least one processor. The at least one processor is coupled to a memory. The memory is configured to store a program or instructions. The at least one processor is configured to execute the program or instructions, to enable the apparatus to implement the method according to either the first aspect or the second aspect and any possible implementation in either of the first aspect and the second aspect.

A sixth aspect of this application provides a communication apparatus, including at least one logic circuit and an input/output interface. The logic circuit is configured to perform the method according to either the first aspect or the second aspect and any possible implementation in either of the first aspect and the second aspect.

A seventh aspect of this application provides a computer-readable storage medium. The storage medium stores instructions. When the instructions are executed by a processor, the processor performs the method according to either the first aspect or the second aspect and any possible implementation in either of the first aspect and the second aspect.

An eighth aspect of this application provides a computer program product (or referred to as a computer program). The computer program product includes computer program code. When the computer program code is run by a processor, the processor is enabled to perform the method according to either the first aspect or the second aspect and any possible implementation in either of the first aspect and the second aspect.

A ninth aspect of this application provides a chip system. The chip system includes at least one processor, configured to support a communication apparatus in implementing functions according to either the first aspect or the second aspect and any possible implementation in either of the first aspect and the second aspect.

In a possible design, the chip system may further include a memory. The memory is configured to store program instructions and data that are necessary for the first communication apparatus. The chip system may include a chip, or may include a chip and another discrete component. Optionally, the chip system further includes an interface circuit, and the interface circuit provides program instructions and/or data for the at least one processor.

A tenth aspect of this application provides a communication system. The communication system includes the communication apparatus according to the third aspect and the communication apparatus according to the fourth aspect. Alternatively, the communication system includes the terminal device according to any one of the foregoing aspects and any implementation of the foregoing aspects, and the network device according to any one of the foregoing aspects and any implementation of the foregoing aspects.

It should be understood that, for technical effect brought by any design in the third aspect to the tenth aspect, refer to the technical effect brought by different designs in the first aspect and the second aspect. Details are not described herein again.

## BRIEF DESCRIPTION OF DRAWINGS

FIG. 1 is a diagram of a communication system according to this application;

FIG. 2a is a diagram of an uplink transmission process according to this application;

FIG. 2b to FIG. 2d are diagrams of protocol layers according to this application;

FIG. 3a and FIG. 3b are diagrams of a BSR format according to this application;

FIG. 4a is a diagram of a redundant packet according to this application;

FIG. 4b is a diagram of a redundant PDU according to this application;

FIG. 5 is a diagram of a communication method according to this application;

FIG. 6a to FIG. 6i are diagrams of a BSR format according to this application;

FIG. 7 is a diagram of application of a communication method according to this application; and

FIG. 8 to FIG. 11 are diagrams of communication apparatuses according to this application.

## DESCRIPTION OF EMBODIMENTS

Some terms in this application are first described, to help persons skilled in the art have a better understanding.

(1) Configuration and preconfiguration: In this application, both configuration and preconfiguration are used. Configuration means that a network device such as a base station or a server sends configuration information of some parameters or values of parameters to a terminal by using a message or signaling, so that the terminal determines a communication parameter or a transmission resource based on the values or the information. Similar to configuration, preconfiguration may be a manner in which a network device such as a base station or a server sends parameter information or values to a terminal by using a communication link or a carrier, or may be a manner of defining a corresponding parameter or parameter value in a standard, or a manner of setting a related parameter or value in a terminal device in advance. This is not limited in this application. Further, these values and parameters may be changed or updated.

(2) In this application, "indicating" may include direct indicating and indirect indicating. When a piece of indication information is described as indicating A, it may be understood that the indication information carries A, directly indicates A, or indirectly indicates A.

In this application, information indicated by the indication information is referred to as to-be-indicated information. In a specific implementation process, there are many manners of indicating the to-be-indicated information. For example, the to-be-indicated information may be directly indicated, for example, the to-be-indicated information or an index of the to-be-indicated information is indicated. Alternatively, the to-be-indicated information may be indirectly indicated by indicating other information, where there is an association relationship between the other information and the to-be-indicated information. Alternatively, only a portion of the to-be-indicated information may be indicated, and the other portion of the to-be-indicated information is known or pre-agreed on. For example, specific information may alternatively be indicated by using an arrangement sequence of a plurality of pieces of information that is pre-agreed on (for example, stipulated in a protocol), to reduce indication overheads to some extent.

The to-be-indicated information may be sent as a whole, or may be divided into a plurality of pieces of sub-information for separate sending. In addition, sending periodicities and/or sending occasions of these pieces of sub-information may be the same or may be different. A specific sending method is not limited in this application. The sending periodicities and/or the sending occasions of these pieces of sub-information may be predefined, for example, predefined according to a protocol, or may be configured by a transmit end device by sending configuration information to a receive end device. The configuration information may include, for example, but not limited to one or a combination of at least two of RRC signaling, medium access control (medium access control, MAC) layer signaling, and physical layer signaling. The MAC layer signaling includes, for example, a MAC CE, and the physical layer signaling includes, for example, downlink control information (downlink control information, DCI).

(3) The terms "system" and "network" may be used interchangeably in embodiments of this application. "At least one" means one or more, and "a plurality of" means two or more. In addition, "and/or" describes an association relationship of associated objects, and indicates that three relationships may exist. For example, A and/or B may indicate the following three cases: Only A exists, both A and B exist, and only B exists, where A and B may be singular or plural. The character "/" usually indicates an "or" relationship between the associated objects. At least one of the following items (pieces) or a similar expression thereof indicates any combination of these items, including a single item (piece) or any combination of a plurality of items (pieces). For example, "at least one of A, B, and C" includes A, B, C, AB, AC, BC, or ABC. In addition, unless otherwise specified, ordinal numbers such as "first" and "second" in embodiments of this application are used to distinguish between a plurality of objects, and are not used to limit a sequence, a time sequence, a priority, or importance of the plurality of objects.

(4) "Sending" and "receiving" in embodiments of this application represent signal transmission directions. In this application, that an apparatus A sends information to an apparatus B may be that A directly sends the information to B, or may be that A indirectly sends the information to B via another apparatus. Similarly, that the entity B receives the information from the entity A may be that the entity B directly receives the information sent by the entity A, or may be that the entity B indirectly receives the information sent by the entity A via another entity. The apparatuses A and B herein each may be a RAN node or a terminal, or may be a module in the RAN node or the terminal. Information sending and receiving may be information exchange between a RAN node and a terminal, for example, information exchange between a base station and a terminal. Information sending and receiving may alternatively be information exchange between two RAN nodes, for example, information exchange between a CU and a DU. Information sending and receiving may alternatively be information exchange between different modules in an apparatus, for example, information exchange between a chip in a terminal and another module in the terminal, or information exchange between a chip in a base station and another module in the base station. "Sending" may alternatively be understood as "outputting" of a chip interface, and "receiving" may alternatively be understood as "inputting" of the chip interface.

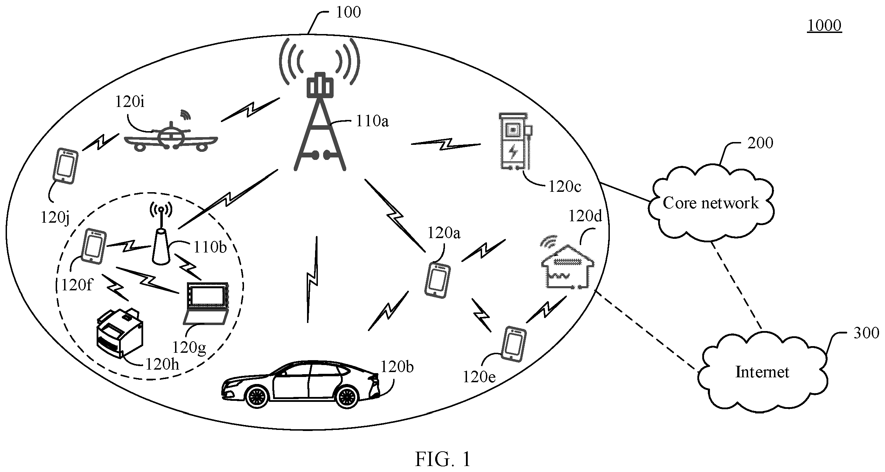

FIG. 1 is a diagram of an architecture of a communication system 1000 to which an embodiment of this application is applied. As shown in FIG. 1, the communication system includes a radio access network (radio access network, RAN) 100 and a core network 200. Optionally, the communication system 1000 may further include an Internet 300. The RAN 100 includes at least one RAN node (for example, 110a and 110b in FIG. 1, collectively referred to as 110), and may further include at least one terminal (for example, 120a to 120j in FIG. 1, collectively referred to as 120). The RAN 100 may further include another RAN node, for example, a wireless relay device and/or a wireless backhaul device (not shown in FIG. 1). The terminal 120 is connected to the RAN node 110 in a wireless manner, and the RAN node 110 is connected to the core network 200 in a wireless or wired manner. A core network device in the core network 200 and the RAN node 110 in the RAN 100 may be different independent physical devices, or may be a same physical device that integrates a logical function of the core network device and a logical function of the RAN node. The terminals may be connected to each other in a wired or wireless manner and the RAN nodes may be connected to each other in a wired or wireless manner.

The RAN 100 may be an evolved universal terrestrial radio access (evolved universal terrestrial radio access, E-UTRA) system, a new radio (new radio, NR) system, or a future radio access system defined in a 3rd generation partnership project (3rd generation partnership project, 3GPP). The RAN 100 may further include the foregoing two or more different radio access systems. The RAN 100 may alternatively be an open RAN (open RAN, O-RAN).

The RAN node, also referred to as a radio access network device, a RAN entity, a wireless access device, or an access node, is configured to help a terminal access the communication system in a wireless manner. In addition, a plurality of RAN nodes 110 may be nodes of a same type, or may be nodes of different types. In some scenarios, roles of the RAN node 110 and the terminal 120 are relative to each other. For example, the network element 120i in FIG. 1 may be a helicopter or an uncrewed aerial vehicle, and may be configured as a mobile base station. For the terminal 120j that accesses the RAN 100 through the network element 120i, the network element 120i is a base station. However, for the base station 110a, the network element 120i is a terminal. The RAN node 110 and the terminal 120 are sometimes referred to as communication apparatuses. For example, the network elements 110a and 110b in FIG. 1 may be understood as communication apparatuses having a base station function, and the network elements 120a to 120j may be understood as communication apparatuses having a terminal function.

In a possible scenario, the RAN node may be a base station (base station), an evolved NodeB (evolved NodeB, eNodeB), an access point (access point, AP), a transmission reception point (transmission reception point, TRP), a next generation NodeB (next generation NodeB, gNB), a next generation base station in a 6th generation (6th generation, 6G) mobile communication system, a base station in a future mobile communication system, an access node in a Wi-Fi system, or the like. The RAN node may be a macro base station (for example, 110a in FIG. 1), a micro base station or an indoor station (for example, 110b in FIG. 1), a relay node or a donor node, or a radio controller in a CRAN scenario. Optionally, the RAN node may alternatively be a server, a wearable device, a vehicle, a vehicle-mounted device, or the like. For example, an access network device in a vehicle-to-everything (vehicle-to-everything, V2X) technology may be a roadside unit (roadside unit, RSU). All or some of functions of the RAN node in this application may alternatively be implemented by using a software function running on hardware, or may be implemented by using an instantiated virtualization function on a platform (for example, a cloud platform). Alternatively, the RAN node in this application may be a logical node, a logical module, or software that can implement all or some of functions of the RAN node.

In another application scenario, a plurality of RAN nodes may cooperate to help the terminal implement radio access, and different RAN nodes separately implement some of functions of a base station. For example, the RAN node may be a central unit (central unit, CU), a distributed unit (distributed unit, DU), a radio unit (radio unit, RU), or the like. The CU herein implements functions of a radio resource control (radio resource control, RRC) protocol and a packet data convergence protocol (packet data convergence protocol, PDCP) of the base station, and may further implement a function of a service data adaptation protocol (service data adaptation protocol, SDAP). The DU implements functions of a radio link control layer and a MAC layer of the base station, and may further implement functions of a part or all of physical layers. For specific descriptions of the foregoing protocol layers, refer to related technical specifications of 3GPP. The RU may be configured to implement a transceiver function of a radio frequency signal. The CU and the DU may be two independent RAN nodes, or may be integrated into a same RAN node, for example, integrated into a baseband unit (baseband unit, BBU). The RU may be included in a radio frequency device, for example, included in a remote radio unit (remote radio unit, RRU) or an active antenna unit (active antenna unit, AAU). The CU may be classified into two types of RAN nodes at a CU-control plane and a CU-user plane.

In different systems, the RAN node may have a different name. For example, in an O-RAN system, a CU may be referred to as an open CU (open CU, O-CU), a DU may be referred to as an open DU (open DU, O-DU), and an RU may be referred to as an open RU (open RU, O-RU). The RAN node in embodiments of this application may be implemented by using a software module, a hardware module, or a combination of a software module and a hardware module. For example, the RAN node may be a server to which a corresponding software module is loaded. A specific technology and a specific device form used by the RAN node are not limited in embodiments of this application. For ease of description, the following uses a base station as an example of the RAN node for description.

A terminal is a device having a wireless transceiver function, and may send a signal to the base station, or receive a signal from the base station. The terminal may also be referred to as a terminal device, user equipment (user equipment, UE), a mobile station, a mobile terminal, or the like. The terminal may be widely used in various scenarios, for example, device-to-device (device-to-device, D2D), vehicle to everything (vehicle to everything, V2X) communication, machine-type communication (machine-type communication, MTC), internet of things (internet of things, IOT), virtual reality, augmented reality, industrial control, automatic driving, telemedicine, a smart grid, smart furniture, a smart office, smart wearable, smart transportation, and a smart city. The terminal may be a mobile phone, a tablet computer, a computer with a wireless transceiver function, a wearable device, a vehicle, an airplane, a ship, a robot, a robotic arm, a smart home device, or the like. A specific technology and a specific device form used by the terminal are not limited in embodiments of this application.

The base station and the terminal may be fixed or movable. The base station and the terminal may be deployed on land, including an indoor or outdoor device, a hand-held device, or a vehicle-mounted device, or may be deployed on water, or may be deployed on an airplane, a balloon, or an artificial satellite. Application scenarios of the base station and the terminal are not limited in embodiments of this application.

Communication between the base station and the terminal, between the base station and the base station, or between the terminal and the terminal may be performed by using a licensed spectrum, or may be performed by using an unlicensed spectrum, or may be performed by using both the licensed spectrum and the unlicensed spectrum. Communication may be performed by using a spectrum below 6 gigahertz (gigahertz, GHz), or may be performed by using a spectrum above 6 GHz, or may be simultaneously performed by using the spectrum below 6 GHz and the spectrum above 6 GHz. A spectrum resource used for wireless communication is not limited in embodiments of this application.

In embodiments of this application, a function of the base station may be performed by a module (for example, a chip) in the base station, or may be performed by a control subsystem including the function of the base station. The control subsystem including the function of the base station herein may be a control center in the foregoing application scenarios, such as a smart grid, industrial control, smart transportation, and a smart city. A terminal function may be performed by a module (for example, a chip or a modem) in the terminal, or may be performed by an apparatus including the terminal function.

In a wireless communication system (for example, the communication system shown in FIG. 1), a terminal device may send uplink data based on a transmission resource scheduled by a network device, to implement an uplink transmission process. To facilitate understanding of the technical solutions provided in this application, the following describes communication processes that may be involved in this application.

1. Transmission of an XR service

In recent years, with continuous development of communication technologies, a data transmission delay is continuously reduced, and a transmission capacity is increasingly large. In the communication system, some multimedia services with high real-time performance and high data capacity requirements, such as video transmission, CG, and XR, gradually penetrate. XR includes VR, AR, MR, and the like. With a rapid increase of a communication transmission rate, a real-time video transmission service has gradually become one of core services in a current network. With continuous progress and improvement of extended reality technologies, related industries have developed vigorously. Nowadays, a VR technology, as a kind of the XR, already enters various fields closely related to production and life of people, such as education, entertainment, military, medical care, environmental protection, transportation, and public health. Compared with a conventional video service, the VR has advantages such as multiple viewing angles and strong interaction, so that brand-new visual experience is provided for a user. In addition to smartphones, people increasingly expect to improve XR experience through a terminal device (for example, UE) like a head mounted display (head mounted display, HMD) or smart glasses (such as VR glasses and AR glasses). As an increasingly high requirement is put forward on quality of video transmission, with further development of the extended reality and the tactile internet, guarantee of quality of experience (quality of experience, QoE) and quality of service (quality of service, QoS) of the user has become a key issue in current research.

Generally, as an XR technology develops, an XR service has an increasingly high requirement on an uplink transmission rate. For example, image data, video data, and the like need to be transmitted in an uplink of AR. According to industry evaluation, an uplink transmission rate required to meet basic AR experience is approximately 2 megabits per second (Mbps), and an uplink transmission rate required to meet advanced experience is up to 10 Mbps.

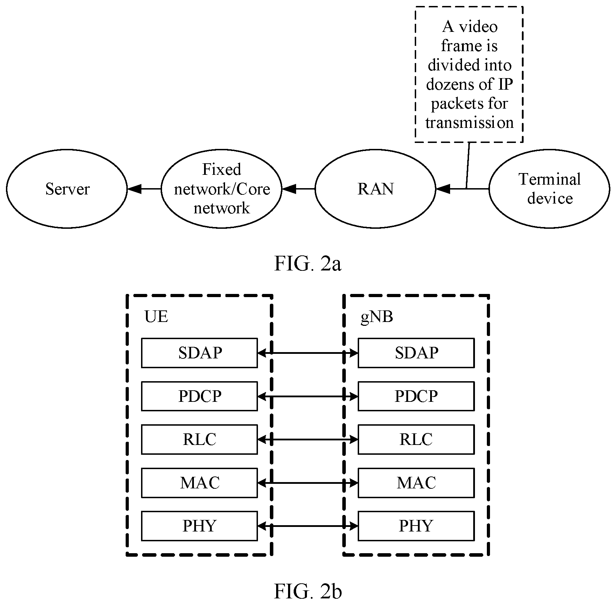

As shown in the example in FIG. 2a, in uplink transmission of a video service related to XR, for transmission of each video frame, currently, a commonly used manner is to divide a picture frame into dozens of internet protocol (Internet Protocol, IP) packets, for example, 50 IP packets, at a network transport layer, then transmit the packets to a radio access network (RAN) by using a terminal device, and then transmit the packets to a server through a core network for rendering. Generally, in a network transmission process, if an error occurs in transmission of one IP packet, it is likely that the entire picture frame cannot be recovered.

In addition, transmission of the XR service also has an active timeout-based packet discard mechanism. Specifically, the XR service usually has a low-delay transmission requirement, to be specific, a video frame of the XR service needs to be transmitted from the server to the terminal device within specific time, for example, it is considered that an end-to-end (from sending by the terminal device to receiving by the server) delay of the XR service is 70 milliseconds (ms), and a delay budget (Delay Budget) of air interface transmission from sending by the terminal device to receiving by the RAN is usually 10 ms. When congestion occurs in air interface transmission, waiting time of the video frame of the XR service in a buffer (buffer) of the terminal device may exceed the delay budget. In this case, the terminal device discards an XR packet that expires, thereby saving transmission resources and ensuring successful transmission of a subsequent video frame.

2. User plane protocol architecture

User plane data between the terminal device and the network device may be transmitted by using a user plane protocol architecture between the terminal device and the network device. Detailed descriptions are provided below with reference to the accompanying drawings.

As shown in FIG. 2b, for example, the terminal device is UE, and the network device is a gNB. A user plane protocol architecture between the UE and the gNB is sequentially as follows from top to bottom:

a service data adaptation protocol (service data adaptation protocol, SDAP) layer, mainly used for QoS mapping;
a packet data convergence protocol (packet data convergence protocol, PDCP) layer, mainly used for header compression, encryption and decryption, sequential delivery, and the like;
a radio link control (radio link control, RLC) layer, mainly used for segmentation and reassembly, automatic repeat request (automatic repeat request, ARQ), and the like;
a medium access control (medium access control, MAC) layer, mainly used for transport channel mapping; and
a physical (physical, PHY) layer, mainly used for modulation and demodulation, precoding, and the like.

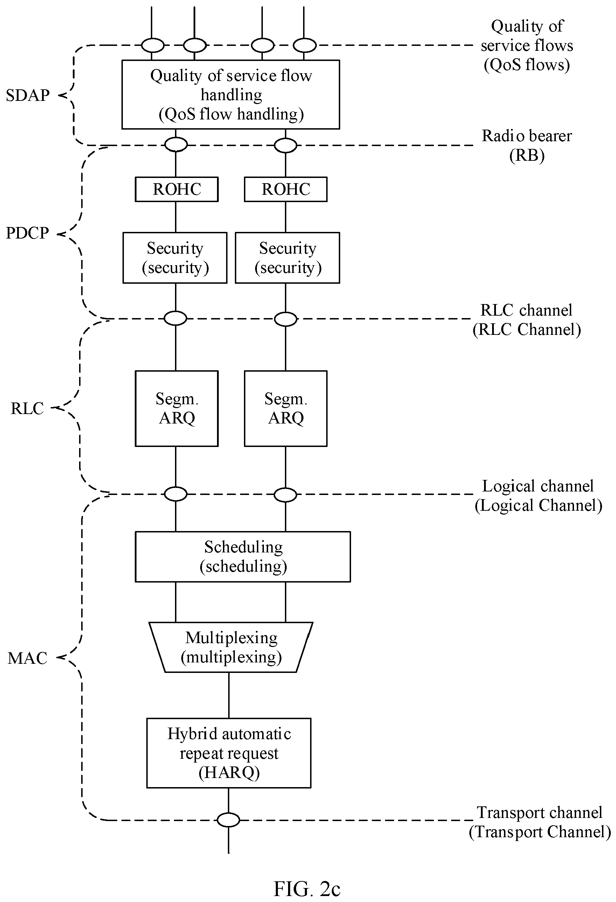

As shown in FIG. 2c, in an uplink transmission process, relationships between the sublayers are as follows.

The PHY layer provides a transport channel (Transport Channel) for the MAC layer. The MAC layer mainly involves hybrid automatic repeat request (hybrid automatic repeat request, HARQ), multiplexing (multiplexing), scheduling (scheduling), and the like.

The MAC layer provides a logical channel (Logical Channel) for the RLC layer. The RLC layer mainly involves segmentation (segmentation) and ARQ.

The RLC layer provides an RLC channel (RLC Channel) for the PDCP. The PDCP mainly involves security (security), robust header compression (robust header compression, ROHC), and the like.

The PDCP provides a radio bearer (Radio Bearer, RB) for the SDAP. The SDCP mainly involves quality of service flow handling (QoS flow handling).

The SDAP provides a QoS flow for a core network (for example, a 5G core network (5G core, 5GC)).

In addition, a mapping relationship of user plane data flows between the sublayers includes:

The SDAP is used for mapping between an UL/DL QoS flow and an RB. One or more QoS flows may be mapped to a same RB, and one QoS flow can be mapped to only one RB at a time. A QoS flow ID (QFI) is marked in an UL/DL packet, or a mapping relationship between a mapped QoS flow and an RB is used for an UL SDAP PDU based on a DL SDAP PDU (Protocol Data Unit).

The PDCP is used for mapping an RB to an RLC channel. Generally, one RLC channel corresponds to one RB.

The RLC layer is used for mapping an RLC channel to a logical channel. Each logical channel corresponds to one RLC channel, and also corresponds to one RB.

The MAC layer is used for scheduling and multiplexing logical channels, scheduling the logical channels based on priorities, and multiplexing a plurality of logical channels onto a same transport channel to be delivered to the PHY layer for transmission.

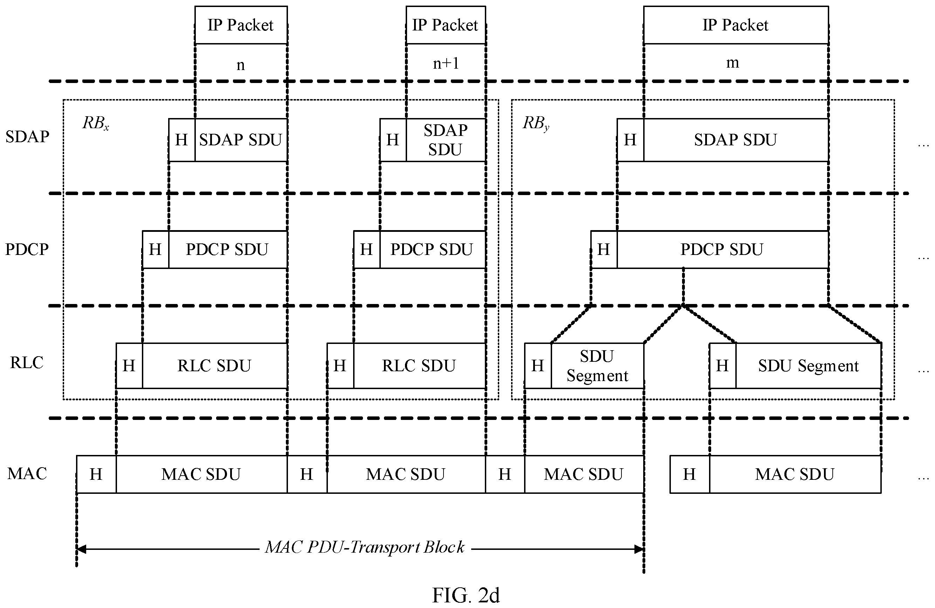

FIG. 2d is a diagram of data flow transmission at each sublayer. Data blocks that need to be transmitted include a first resource block (resource block, RB) (denoted as RBx) and a second resource block (denoted as RBy).

In a processing process of the SDAP, IP packets (IP Packets) received by the SDAP include an IP Packet numbered n, an IP Packet numbered n+1, and an IP Packet numbered m. In addition, the SDAP may process each IP Packet, generate a corresponding SDAP PDU, and transfer the SDAP PDU to the PDCP layer as an SDU of the PDCP.

In a processing process of the PDCP, each SDAP PDU of the SDAP is processed, to generate a corresponding PDCP PDU, and the PDCP PDU is transferred to the RCL layer as an SDU of the RLC layer.

In a processing process of the RLC layer, each PDCP PDU of the PDCP is processed, to generate a corresponding RLC PDU. It should be noted that processing herein includes a segmentation operation. For example, a PDCP PDU corresponding to the IP Packet numbered m is segmented to obtain two RLC SDU segments (segments).

In a processing process of the MAC layer, the RLC PDU may be multiplexed and a MAC header may be added to form a transport block (Transport Block).

Optionally, in the implementation example shown in FIG. 2d, in a first media access control protocol data unit-transport block (MAC PDU-Transport Block) generated by the MAC layer, one part includes two RLC PDUs (corresponding to the IP packets numbered n and n+1) from a radio bearer x, and another part includes the RLC PDU (corresponding to the IP packet numbered m) obtained from a previous segment of a PDCP PDU segment of a radio bearer y.

Optionally, in the implementation example shown in FIG. 2d, a second MAC PDU-transport block (not shown in the figure) may be further generated at the MAC layer, including an RLC PDU obtained from a last segment of the PDCP PDU segment of the radio bearer y.

3. Uplink scheduling request (scheduling request, SR) mechanism

In an uplink transmission process, if the terminal device has no uplink data to be transmitted, the network device does not need to allocate an uplink resource to the terminal device. Otherwise, a waste of resources is caused. Therefore, the terminal device needs to first notify the network device whether the terminal device has uplink data to be transmitted, so that the network device can determine whether to allocate the uplink resource to the terminal device. This process may be implemented by using the uplink SR mechanism. The terminal device notifies the network device, by using an SR, whether an uplink resource is required for uplink data transmission, but does not notify the network device of an amount of uplink data that needs to be sent (which is reported by using a BSR). After the network device receives the SR, a quantity of uplink resources allocated to the terminal device depends on implementation of the network device. A common practice is to allocate at least sufficient resources for sending the BSR by the terminal device.

When the terminal device requests an uplink resource from the network device by using the SR, only whether the terminal device needs to send uplink data is indicated, but an amount of uplink data that needs to be sent by the terminal device is not indicated. The terminal device needs to notify the network device, by using the BSR, of an amount of data that needs to be sent in an uplink buffer (buffer) of the terminal device, so that the network device determines a quantity of uplink resources to be allocated to the terminal device. The terminal device may establish a large quantity of radio bearers (radio bearers) based on different services. Generally, each radio bearer corresponds to one logical channel. If one BSR is reported for each logical channel, a large quantity of signaling overheads are caused. To avoid this case, each logical channel may be placed in one LCG (for example, there are four LCGs in LTE, and there are eight LCGs in NR). The terminal device reports a BSR based on the LCG, instead of reporting one BSR for each logical channel.

In addition, logical channels are grouped to provide a better BSR reporting mechanism. Logical channels with similar scheduling requirements are placed in a same LCG, and a buffer state of the logical channel is reported by using a short BSR. How to group the logical channels depends on algorithm implementation of the network device (for example, logical channels with a same QoS requirement or priority (priority) are placed in a same LCG). That is, the network device is used for uplink QoS handling. Because configurations of the LCG and the logical channel of the terminal device are controlled by the network device, the network device knows logical channels included in each LCG and priorities of these logical channels. Although the network device cannot know a buffer state of a single logical channel, logical channels in a same LCG have similar QoS/priority requirements. Therefore, reporting a buffer state based on the LCG can also enable uplink scheduling to provide an appropriate scheduling result.

An NR system is used as an example. The BSR is reported by using a BSR MAC control element (CE) at the MAC layer, and includes two formats.

A format 1 may be referred to as a short BSR format or a truncated BSR format.

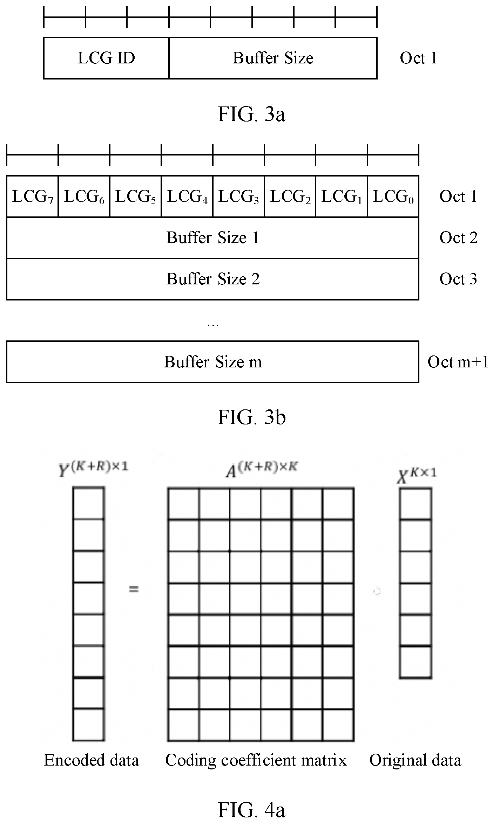

As shown in FIG. 3a, in an implementation example of the format 1, the terminal device reports a BSR of one LCG, and a format includes a logical channel group identifier (LCG ID) field and a corresponding buffer size (Buffer Size) field.

For example, a correspondence between the Buffer Size field in the format 1 and a value in a Buffer State is shown in Table 1. In Table 1, a value of the Buffer Size field is denoted as an "index (Index)" in Table 1, and a value of the Buffer State corresponding to the Buffer Size field is denoted as a "buffer size value (buffer size value, BS value)".

Table 1

| Index | BS value | Index | BS value | Index | BS value | Index | BS value |
|---|---|---|---|---|---|---|---|
| 0 | 0 | 8 | ≤102 | 16 | ≤1446 | 24 | ≤20516 |
| 1 | ≤10 | 9 | ≤142 | 17 | ≤2014 | 25 | ≤28581 |
| 2 | ≤14 | 10 | ≤198 | 18 | ≤2806 | 26 | ≤39818 |
| 3 | ≤20 | 11 | ≤276 | 19 | ≤3909 | 27 | ≤55474 |
| 4 | ≤28 | 12 | ≤384 | 20 | ≤5446 | 28 | ≤77284 |
| 5 | ≤38 | 13 | ≤535 | 21 | ≤7587 | 29 | ≤107669 |
| 6 | ≤53 | 14 | ≤745 | 22 | ≤10570 | 30 | ≤150000 |
| 7 | ≤74 | 15 | ≤1038 | 23 | ≤14726 | 31 | >150000 |

For example, when an amount of actually buffered data in the LCG is less than or equal to 10 bytes (Bytes) (for example, 2 bytes, 8 bytes, or 10 bytes), an index value of the Buffer Size field is 1. When the buffered data amount of the LCG is greater than 276 bytes and less than or equal to 384 bytes (for example, 277 bytes or 300 bytes), the index value of the Buffer Size field is 12. In other words, a required uplink resource amount indicated by the "Buffer Size field" carried in the BSR is greater than or equal to the amount of the actually buffered data in the LCG. That is, the required uplink resource amount indicated by the "Buffer Size field" carried in the BSR is an upper bound value of the amount of the actually buffered data in the LCG. Compared with a manner in which the terminal device reports the amount of the actually buffered data, this manner can reduce overheads. In addition, the network device may perform uplink scheduling based on the required uplink resource amount indicated by the "Buffer Size field" carried in the BSR, and transmission of the actually buffered data in the LCG can also be met.

A format 2 may be referred to as a long BSR format, a long truncated BSR format, or a pre-emptive BSR format.

As shown in FIG. 3b, in an implementation example of the format 2, eight LCG fields are included, corresponding to LCG IDs 0 to 7, and LCGi indicates whether an $i^{th}$ LCG is reported. When a value of LCGi is 1, it indicates that a buffer size of the $i^{th}$ LCG is reported. Otherwise, it indicates that the buffer size of the $i^{th}$ LCG is not reported. Therefore, in this format, buffer sizes of a maximum of eight LCGs may be reported to the network device together. Correspondingly, in the example shown in FIG. 3b, m Buffer Size fields are included, where m is less than or equal to 8. A value of m (namely, a quantity of Buffer Size fields) is the same as a quantity of LCGs whose values are 1 in an LCG field. In other words, values of m Buffer Size fields respectively indicate buffered data amounts of the LCGs whose values are 1 in the LCG field. For example, when values of the eight LCG fields indicate that the eight LCGs are all reported, m is equal to 8. For another example, when the values of the eight LCG fields indicate that less than eight LCGs are reported, m is less than 8.

For example, a correspondence between the Buffer Size field in the format 2 and a value in a Buffer State is shown in Table 2. Similarly, in Table 2, a value of the Buffer Size field is denoted as an "index (Index)" in Table 1, and a value of the Buffer State corresponding to the Buffer Size field is denoted as a "buffer size value (buffer size value, BS value)".

Table 2

| Index | BS value | Index | BS value | Index | BS value | Index | BS value |
|---|---|---|---|---|---|---|---|
| 0 | 0 | 64 | ≤560 | 128 | ≤31342 | 192 | ≤1754595 |
| 1 | ≤10 | 65 | ≤597 | 129 | ≤33376 | 193 | ≤1868488 |
| 2 | ≤11 | 66 | ≤635 | 130 | ≤35543 | 194 | ≤1989774 |
| 3 | ≤12 | 67 | ≤677 | 131 | ≤37850 | 195 | ≤2118933 |
| 4 | ≤13 | 68 | ≤720 | 132 | ≤40307 | 196 | ≤2256475 |
| 5 | ≤14 | 69 | ≤767 | 133 | ≤42923 | 197 | ≤2402946 |
| 6 | ≤15 | 70 | ≤817 | 134 | ≤45709 | 198 | ≤2558924 |
| 7 | ≤16 | 71 | ≤870 | 135 | ≤48676 | 199 | ≤2725027 |
| 8 | ≤17 | 72 | ≤926 | 136 | ≤51836 | 200 | ≤2901912 |
| 9 | ≤18 | 73 | ≤987 | 137 | ≤55200 | 201 | ≤3090279 |
| 10 | ≤19 | 74 | ≤1051 | 138 | ≤58784 | 202 | ≤3290873 |

(continued)

| Index | BS value | Index | BS value | Index | BS value | Index | BS value |
|---|---|---|---|---|---|---|---|
| 11 | ≤20 | 75 | ≤1119 | 139 | ≤62599 | 203 | ≤3504487 |
| 12 | ≤22 | 76 | ≤1191 | 140 | ≤66663 | 204 | ≤3731968 |
| 13 | ≤23 | 77 | ≤1269 | 141 | ≤70990 | 205 | ≤3974215 |
| 14 | ≤25 | 78 | ≤1351 | 142 | ≤75598 | 206 | ≤4232186 |
| 15 | ≤26 | 79 | ≤1439 | 143 | ≤80505 | 207 | ≤4506902 |
| 16 | ≤28 | 80 | ≤1532 | 144 | ≤85730 | 208 | ≤4799451 |
| 17 | ≤30 | 81 | ≤1631 | 145 | ≤91295 | 209 | ≤5110989 |
| 18 | ≤32 | 82 | ≤1737 | 146 | ≤97221 | 210 | ≤5442750 |
| 19 | ≤34 | 83 | ≤1850 | 147 | ≤103532 | 211 | ≤5796046 |
| 20 | ≤36 | 84 | ≤1970 | 148 | ≤110252 | 212 | ≤6172275 |
| 21 | ≤38 | 85 | ≤2098 | 149 | ≤117409 | 213 | ≤6572925 |
| 22 | ≤40 | 86 | ≤2234 | 150 | ≤125030 | 214 | ≤6999582 |
| 23 | ≤43 | 87 | ≤2379 | 151 | ≤133146 | 215 | ≤7453933 |
| 24 | ≤46 | 88 | ≤2533 | 152 | ≤141789 | 216 | ≤7937777 |
| 25 | ≤49 | 89 | ≤2698 | 153 | ≤150992 | 217 | ≤8453028 |
| 26 | ≤52 | 90 | ≤2873 | 154 | ≤160793 | 218 | ≤9001725 |
| 27 | ≤55 | 91 | ≤3059 | 155 | ≤171231 | 219 | ≤9586039 |
| 28 | ≤59 | 92 | ≤3258 | 156 | ≤182345 | 220 | ≤10208280 |
| 29 | ≤62 | 93 | ≤3469 | 157 | ≤194182 | 221 | ≤10870913 |
| 30 | ≤66 | 94 | ≤3694 | 158 | ≤206786 | 222 | ≤11576557 |
| 31 | ≤71 | 95 | ≤3934 | 159 | ≤220209 | 223 | ≤12328006 |
| 32 | ≤75 | 96 | ≤4189 | 160 | ≤234503 | 224 | ≤13128233 |
| 33 | ≤80 | 97 | ≤4461 | 161 | ≤249725 | 225 | ≤13980403 |
| 34 | ≤85 | 98 | ≤4751 | 162 | ≤265935 | 226 | ≤14887889 |
| 35 | ≤91 | 99 | ≤5059 | 163 | ≤283197 | 227 | ≤15854280 |
| 36 | ≤97 | 100 | ≤5387 | 164 | ≤301579 | 228 | ≤16883401 |
| 37 | ≤103 | 101 | ≤5737 | 165 | ≤321155 | 229 | ≤17979324 |
| 38 | ≤110 | 102 | ≤6109 | 166 | ≤342002 | 230 | ≤19146385 |
| 39 | ≤117 | 103 | ≤6506 | 167 | ≤364202 | 231 | ≤20389201 |
| 40 | ≤124 | 104 | ≤6928 | 168 | ≤387842 | 232 | ≤21712690 |
| 41 | ≤132 | 105 | ≤7378 | 169 | ≤413018 | 233 | ≤23122088 |
| 42 | ≤141 | 106 | ≤7857 | 170 | ≤439827 | 234 | ≤24622972 |
| 43 | ≤150 | 107 | ≤8367 | 171 | ≤468377 | 235 | ≤26221280 |
| 44 | ≤160 | 108 | ≤8910 | 172 | ≤498780 | 236 | ≤27923336 |
| 45 | ≤170 | 109 | ≤9488 | 173 | ≤531156 | 237 | ≤29735875 |
| 46 | ≤181 | 110 | ≤10104 | 174 | ≤565634 | 238 | ≤31666069 |
| 47 | ≤193 | 111 | ≤10760 | 175 | ≤602350 | 239 | ≤33721553 |
| 48 | ≤205 | 112 | ≤11458 | 176 | ≤641449 | 240 | ≤35910462 |
| 49 | ≤218 | 113 | ≤12202 | 177 | ≤683087 | 241 | ≤38241455 |

(continued)

| Index | BS value | Index | BS value | Index | BS value | Index | BS value |
|---|---|---|---|---|---|---|---|
| 50 | ≤233 | 114 | ≤12994 | 178 | ≤727427 | 242 | ≤40723756 |
| 51 | ≤248 | 115 | ≤13838 | 179 | ≤774645 | 243 | ≤43367187 |
| 52 | ≤264 | 116 | ≤14736 | 180 | ≤824928 | 244 | ≤46182206 |
| 53 | ≤281 | 117 | ≤15692 | 181 | ≤878475 | 245 | ≤49179951 |
| 54 | ≤299 | 118 | ≤16711 | 182 | ≤935498 | 246 | ≤52372284 |
| 55 | ≤318 | 119 | ≤17795 | 183 | ≤996222 | 247 | ≤55771835 |
| 56 | ≤339 | 120 | ≤18951 | 184 | ≤1060888 | 248 | ≤59392055 |
| 57 | ≤361 | 121 | ≤20181 | 185 | ≤1129752 | 249 | ≤63247269 |
| 58 | ≤384 | 122 | ≤21491 | 186 | ≤1203085 | 250 | ≤67352729 |
| 59 | ≤409 | 123 | ≤22885 | 187 | ≤1281179 | 251 | ≤71724679 |
| 60 | ≤436 | 124 | ≤24371 | 188 | ≤1364342 | 252 | ≤76380419 |
| 61 | ≤464 | 125 | ≤25953 | 189 | ≤1452903 | 253 | ≤81338368 |
| 62 | ≤494 | 126 | ≤27638 | 190 | ≤1547213 | 254 | >81338368 |
| 63 | ≤526 | 127 | ≤29431 | 191 | ≤1647644 | 255 | Reserved |

It should be noted that implementation of Table 2 is similar to the implementation process of Table 1. To be specific, a required uplink resource amount indicated by a "Buffer Size field" carried in a BSR is greater than or equal to an amount of actually buffered data in an LCG.

Optionally, for example, the terminal device is UE. When the following events occur, reporting of a BSR is triggered.

Event 1: An uplink data buffer of the UE is empty and new data arrives: When all logical channels of all LCGs have no uplink data that can be sent, if any logical channel belonging to any LCG in this case has data that can be sent, the UE triggers reporting of a BSR. For example, the UE sends uplink data for the first time. The BSR is referred to as a "regular buffer state report (Regular BSR)".

Event 2: Data with a high priority arrives: If the UE has sent a BSR and is waiting for an uplink grant (Uplink grant), when the data with the high priority (to be specific, a logical channel to which the data belongs has a higher priority than a logical channel of any LCG) needs to be transmitted, the UE triggers reporting of a BSR. The BSR is referred to as a "regular BSR".

Event 3: The UE periodically updates a buffer state of the UE to the network device: The network device configures a periodicBSR-Timer for the UE, and if the timer expires, the UE triggers reporting of a BSR. For example, when the UE needs to upload a large file, time at which data arrives at a transmission buffer of the UE is not synchronized with time at which the UE receives an uplink grant. In other words, the UE keeps filling data into the uplink transmission buffer while sending the BSR and receiving the uplink grant. Therefore, the UE needs to continuously update an amount of uplink data to be transmitted. The BSR is referred to as a "periodic buffer state report (Periodic BSR)".

In addition, to improve robustness of the BSR, a communication system (for example, an LTE system or an NR system) provides a mechanism for retransmitting the BSR. This is to avoid a case in which the UE sends the BSR but never receives the uplink grant. The network device configures a retxBSR-Timer for the UE. When the timer expires and there is data that can be sent on any logical channel of any LCG of the UE, a BSR is triggered. The BSR is referred to as a "regular BSR". When receiving an uplink grant for newly transmitted data, the UE restarts the retxBSR-Timer. Generally, when the retxBSR-Timer expires and there is uplink data (UL data) on at least one logical channel of an LCG, the timer prevents a deadlock in which the UE keeps waiting for an UL grant because the network device does not allocate a corresponding uplink resource after the UE sends the BSR. After the timer expires, the UE can retransmit the BSR.

Optionally, when the UE has an uplink resource and finds that data to be sent is insufficient to fill the resource, remaining bits are filled with some irrelevant values as padding bits. Instead of being used as padding bits (padding bit), the bits are used to transmit useful data such as the BSR. Therefore, when a quantity of padding bits is greater than or equal to a size of "BSR MAC CE+corresponding subheader (subheader)", the UE sends the BSR by using these bits. The BSR is referred to as a "padding buffer state report (Padding BSR)".

Optionally, for the regular BSR and the periodic BSR, if there is more than one LCG having data to be sent in one slot (slot), a long BSR is reported. Otherwise, a short BSR is reported. For the padding BSR, when a quantity of padding bits is greater than or equal to a size of "short BSR+corresponding subheader" but less than a size of "long BSR+corresponding subheader", if more than one LCG in the slot has data to be sent, a BSR of an LCG that has data to be sent and in which a logical channel with a highest priority is located is reported to the network device, where a format of the BSR is a truncated BSR format. If only one LCG in the slot has data to be sent, a short BSR is sent. For the padding BSR, when the quantity of padding bits is greater than or equal to the size of "long BSR+corresponding subheader", a long BSR is sent. Even if a plurality of events trigger the BSR, one MAC PDU can contain at most one MAC BSR CE. A priority of the regular BSR and a priority of the periodic BSR are higher than a priority of the padding BSR. That is, the regular BSR/periodic BSR is preferentially transmitted.

4. FEC coding of source data

For a multimedia service, for example, an immersive service like XR, source bit (bit) data usually introduces FEC coding to introduce source redundancy, such as Raptor Q code and RS code. Generally, redundancy is added to source FEC in the worst case, for example, the redundancy may reach 30%. In this case, a channel condition cannot be adapted. When the redundancy far exceeds a requirement, a large quantity of air interface resources are consumed.

In an implementation example, the RS code is used as an example. A data block (a data block includes several packets) is considered as a unit, and original data is encoded by constructing a coding coefficient matrix, to obtain a group of encoded packets. Generally, coefficients in the coding matrix are selected from a finite field, for example, a Galois field (Galois Field, GF).

As shown in FIG. 4a, in an implementation example, for example, data buffered in the LCG includes one or more packets. A coefficient is selected from the GF(q) field, and a size of the coding matrix is $(K+R)\times K$ (both K and R are positive integers, and in the figure, for example, a value of K is 6 and a value of R is 2). Network coding is performed on a data block including K original packets, to obtain K+R encoded packets, and a corresponding code rate is represented by $\frac{K}{K+R}$ . It should be emphasized that, in the RS scheme, there is no association between encoded data blocks. That is, an encoding operation is performed on each independent data block, and redundancy (a code rate) of each data block may be the same or may be different. The generated K+R encoded packets are sent. When receiving K linearly independent encoded packets, a receive end can correctly decode and recover the K original packets. In addition, when a portion of the K packets fail to be transmitted, the portion of packets may be recovered by using the R encoded packets.

It should be understood that, in FIG. 4a, the K packets are application data transmitted by the terminal device in an uplink. In other words, the K packets may be referred to as system information, and the R redundant packets generated based on the K packets may be referred to as redundant information.

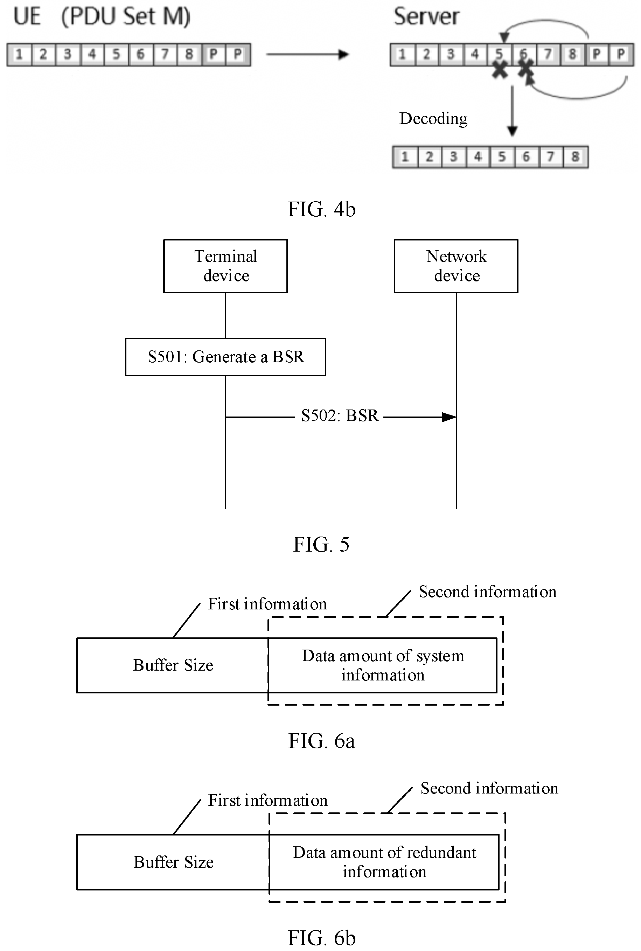

As shown in FIG. 4b, in another implementation example, for example, data buffered in the LCG includes one or more PDUs. For example, one frame of data buffered by UE in the LCG corresponds to an M$^{th}$ protocol data unit set (PDU set) (denoted as a PDU set M in the figure), and the PDU set M may include eight PDUs, which are respectively PDUs numbered 1 to 8 in FIG. 4b. In source redundancy coding, FEC redundancy is introduced to the PDU set M, and P PDUs or packets are encoded into Q PDUs or encoded packets, where both P and Q are positive integers. In the figure, for example, a value of P is 8 and a value of Q is 10. For example, the PDU set M corresponding to one frame of data includes 10 PDUs, where eight PDUs are system PDUs (namely, the PDUs numbered 1 to 8 in FIG. 4b), and two PDUs are encoded redundant PDUs (namely, two PDUs numbered P in FIG. 4b). In this case, two PDU errors can be corrected. To be specific, when the PDUs numbered 5 and 6 fail to be transmitted, a server (server) may perform recovery by using the two PDUs numbered P, to ensure that the received one frame of data is correctly received without retransmission.

It should be understood that, in FIG. 4b, the P PDUs are application data transmitted by the terminal device in the uplink. In other words, the P PDUs may be referred to as system information, and additional PDUs (namely, Q-P PDUs other than the P PDUs in the Q PDUs) generated based on the P PDUs may be referred to as redundant information.

It can be learned from the foregoing implementation process that uplink resources requested by the terminal device by using the BSR includes a resource used to carry the system information and a resource used to carry the redundant information, and the redundant information is used to improve reliability of uplink transmission. Then, after the terminal device receives, from the network device, a resource indication scheduled based on the BSR, the terminal device may perform uplink transmission based on the resource indication. Correspondingly, a resource indicated by the resource indication also includes a resource used to carry the redundant information.

However, in the foregoing implementation process, how to improve performance of BSR-based uplink scheduling is a pressing technical challenge. For example, because the resource indicated by the resource indication sent by the network device based on the BSR includes a resource with the redundant information, when the uplink resources are fixed, a quantity of terminal devices (or referred to as a quantity of users) scheduled by the network device is decreased. Consequently, multi-user scheduling performance is poor. For another example, because the resource indicated by the resource indication sent by the network device based on the BSR includes a resource with the redundant information, the terminal device may transmit the redundant information based on the resource indication. This inevitably causes an increase in an uplink delay.

To resolve the foregoing problem, this application provides a communication method and a related device, to improve performance of BSR-based uplink scheduling. Detailed descriptions are provided below with reference to the accompanying drawings.

FIG. 5 is a diagram of a communication method according to this application. The method includes the following steps.

It should be noted that, in this application, the method provided in this application is illustrated by using an example in which a network device and a terminal device are used as execution bodies of the interaction example. However, the execution bodies of the interaction example are not limited in this application. For example, the method performed by the network device may alternatively be performed by a module (for example, a chip, a chip system, or a processor) of the network device, or may be implemented by a logical node, a logical module, or software that can implement all or some functions of the network device. The method performed by the terminal device may alternatively be performed by a module (for example, a chip, a chip system, or a processor) of the terminal device, or may be implemented by a logical node, a logical module, or software that can implement all or some of functions of the terminal device.

The method shown in FIG. 5 includes Steps S501 and S502. The following separately describes the steps.

S501: The terminal device generates a BSR.

S502: The terminal device sends the BSR, and correspondingly, the network device receives the BSR.

The BSR sent by the terminal device in Step S502 includes first information, the first information indicates a buffered data amount of a logical channel group (logical channel group, LCG), the buffered data amount of the LCG is related to a data amount of system information in the LCG and a data amount of redundant information in the LCG, and the redundant information is generated based on the system information.

It should be understood that, in Step S502, the terminal device may indicate the buffered data amount of the LCG by using the first information in the BSR. Accordingly, the network device may determine the buffered data amount of the LCG based on the first information. In addition, the buffered data amount that is of the LCG and that is indicated by the first information is greater than or equal to an actual buffered data amount of the LCG, and the actual buffered data amount of the LCG is a sum of the data amount of the system information in the LCG and the data amount of the redundant information in the LCG. The first information in the BSR reported by the terminal device may be an index value, and a buffered data amount that is of the LCG and that corresponds to the index value is an upper bound value of the actual buffered data amount of the LCG (for details, refer to related descriptions in Table 1 and Table 2 above). For example, the first information may be carried in a buffer size (Buffer Size) field in the BSR. For details, refer to related descriptions in FIG. 3a and FIG. 3b.

In other words, that the buffered data amount that is of the LCG and that is indicated by the first information is related to the data amount of the system information in the LCG and the data amount of the redundant information in the LCG may be understood as follows: The buffered data amount that is of the LCG and that is indicated by the first information is greater than or equal to the sum of the data amount of the system information in the LCG and the data amount of the redundant information in the LCG, or the buffered data amount that is of the LCG and that is indicated by the first information is an upper bound value of the sum of the data amount of the system information in the LCG and the data amount of the redundant information in the LCG.

It should be understood that the system information in the LCG may include application data of the terminal device, and the application data is obtained through source coding. For example, application data such as video transmission, cloud gaming (cloud gaming, CG), and extended reality (extended reality, XR) is generated through source coding, where XR includes virtual reality (virtual reality, VR), augmented reality (augmented reality, AR), and mixed reality (mixed reality, MR).

It should be understood that the redundant information in the LCG may be used to improve reliability of uplink transmission of the system information in the LCG. Correspondingly, that the redundant information is generated based on the system information may be understood as follows: The redundant information is redundancy generated through coding based on the system information, where packet-level coding such as network coding (network coding) or fountain code (Fountain Code) is usually used, or based on the system information, the redundant information is redundancy generated by using forward error correction (forward error correction, FEC) code.

It should be noted that the BSR sent by the terminal device in Step S502 further includes second information, and the second information indicates any one of the following information A to information G.

Information A: data amount of the system information.
Information B: data amount of the redundant information.
Information C: data amount of the system information and data amount of the redundant information.
Information D: a ratio of the data amount of the system information to the buffered data amount of the LCG.
Information E: a ratio of the data amount of the redundant information to the buffered data amount of the LCG.
Information F: a ratio of the data amount of the system information to the sum of the data amount of the system information and the data amount of the redundant information.

Information G: a ratio of the data amount of the redundant information to the sum of the data amount of the system information and the data amount of the redundant information.

As shown in FIG. 6a, in an implementation example of the information A, the second information may include a field whose value indicates "the data amount of the system information", thereby conveying the information A. In other words, upon receiving the BSR including the first information and the second information in Step S502, the network device may determine the information A based on the field.

As shown in FIG. 6b, in an implementation example of the information B, the second information may include a field whose value indicates "the data amount of the redundant information", thereby conveying the information B. In other words, upon receiving the BSR including the first information and the second information in Step S502, the network device may determine the information B based on the field.

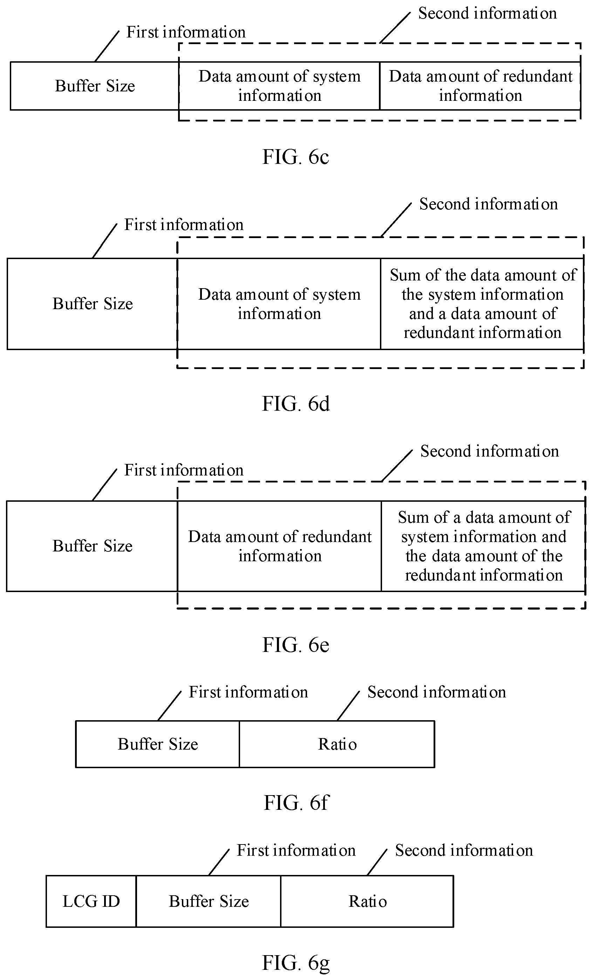

As shown in FIG. 6c, in an implementation example of the information C, the second information may include two fields: one field whose value indicates "the data amount of the system information", and another field whose value indicates "the data amount of the redundant information". Together, the two fields convey the information C. In other words, upon receiving the BSR including the first information and the second information in Step S502, the network device may determine the information C based on the two fields.

As shown in FIG. 6d, in another implementation example of the information C, the second information may include two fields: one field whose value indicates "the data amount of the system information", and another field whose value indicates "the sum of the data amount of the system information and the data amount of the redundant information". Together, the two fields convey the information C. In other words, upon receiving the BSR including the first information and the second information in Step S502, the network device may determine the data amount of the system information based on the one field, and determine the data amount of the redundant information by calculating the difference between data amounts indicated by the two fields. That is, the network device may determine the information C based on the two fields.

As shown in FIG. 6e, in another implementation example of the information C, the second information may include two fields: one field whose value indicates "the data amount of the redundant information", and another field whose value indicates "the sum of the data amount of the system information and the data amount of the redundant information". Together, the two fields convey the information C. In other words, upon receiving the BSR including the first information and the second information in Step S502, the network device may determine the data amount of the redundant information based on the one field, and determine the data amount of the system information by calculating the difference between data amounts indicated by the two fields. That is, the network device may determine the information C based on the two fields.

As shown in FIG. 6f, in an implementation example of the information D to the information G, the second information may include one field that indicates a ratio (Ratio).

In an implementation example, in FIG. 6f, the first information indicates the buffered data amount of the LCG by using the "Buffer Size" field. If a value of a Ratio field in the second information indicates the information D, the network device may determine the data amount of the system information based on the buffered data amount of the LCG and the information D.

In another implementation example, in FIG. 6f, the first information indicates the buffered data amount of the LCG by using the "Buffer Size" field. If a value of a Ratio field in the second information indicates the information E, the network device may determine the data amount of the redundant information based on the buffered data amount of the LCG and the information E. It can be learned from the foregoing descriptions that the buffered data amount that is of the LCG and that is indicated by the first information is the upper bound value of the sum of the data amount of the system information in the LCG and the data amount of the redundant information in the LCG. Therefore, the network device may determine the data amount of the system information based on the buffered data amount of the LCG and the data amount of the redundant information.

In another implementation example, in FIG. 6f, the first information indicates the buffered data amount of the LCG by using the "Buffer Size" field. If a value of a Ratio field in the second information indicates the information F, the network device may determine the data amount of the system information based on the buffered data amount of the LCG and the information F. It can be learned from the foregoing descriptions that the buffered data amount that is of the LCG and that is indicated by the first information is the upper bound value of the sum of the data amount of the system information in the LCG and the data amount of the redundant information in the LCG. Therefore, the network device may consider the buffered data amount of the LCG as the sum of the data amount of the system information in the LCG and the data amount of the redundant information in the LCG, and determine the data amount of the system information based on the buffered data amount of the LCG and the information F.

In another implementation example, in FIG. 6f, the first information indicates the buffered data amount of the LCG by using the "Buffer Size" field. If a value of a Ratio field in the second information indicates the information G, the network device may determine the data amount of the redundant information based on the buffered data amount of the LCG and the information G. It can be learned from the foregoing descriptions that the buffered data amount that is of the LCG and that is indicated by the first information is the upper bound value of the sum of the data amount of the system information in the LCG and the data amount of the redundant information in the LCG. Therefore, the network device may consider the buffered data amount of the LCG as the sum of the data amount of the system information in the LCG and the data amount of the redundant information in the LCG, and determine the data amount of the redundant information based on the buffered data amount of the LCG and the information F. Then, the network device may determine the data amount of the system information based on the buffered data amount of the LCG and the data amount of the redundant information.

It should be understood that the buffered data amount that is of the LCG and that is indicated by the first information is the upper bound value of the sum of the data amount of the system information in the LCG and the data amount of the redundant information in the LCG. That is, the buffered data amount that is of the LCG and that is indicated by the first information may be greater than the sum of the data amount of the system information in the LCG and the data amount of the redundant information in the LCG. Therefore, in the implementation example shown in FIG. 6f, the data amount that is of the system information and that is determined by the network device is an estimated value, and the estimated value is greater than or equal to an amount of data that is of the system information and that is actually buffered in the LCG. In this manner, overheads can be reduced, and transmission of actually buffered system information in the LCG can be met as much as possible.

In a possible implementation, there is one or more LCGs in the terminal device, that is, there is one or more LCGs indicated by the terminal device by using the BSR. Correspondingly, the BSR may include first information and second information that respectively correspond to the one or more LCGs. For example, there are N (N is a positive integer) LCGs. The BSR may include N pieces of first information and N pieces of second information. The N pieces of first information respectively correspond to the N LCGs, and the N pieces of second information respectively correspond to the N LCGs.

In an implementation example, when a value of N is 1, the BSR reported by the terminal device may be referred to as a short buffer state report (Short BSR) or a truncated buffer state report (Truncated BSR). For an implementation process, refer to the foregoing format 1 and related descriptions.

FIG. 6g shows an implementation example when the value of N is 1. In this implementation example, an example in which the second information indicates the information G is used for description. Compared with that in the implementation process shown in FIG. 6f, as described in the foregoing format 1, the BSR may include an LCG ID field, indicating the LCGs corresponding to the first information and the second information. In other words, after receiving the BSR in Step S502, the network device can determine, based on the LCG ID field, the LCGs corresponding to the first information and the second information that are carried in the BSR.

In another implementation example, when the value of N is greater than 1, the BSR reported by the terminal device may be referred to as a long buffer state report (Long BSR), a long truncated buffer state report (Long Truncated BSR), or a pre-emptive buffer state report (Pre-emptive BSR). For an implementation process, refer to the foregoing format 2 and related descriptions.

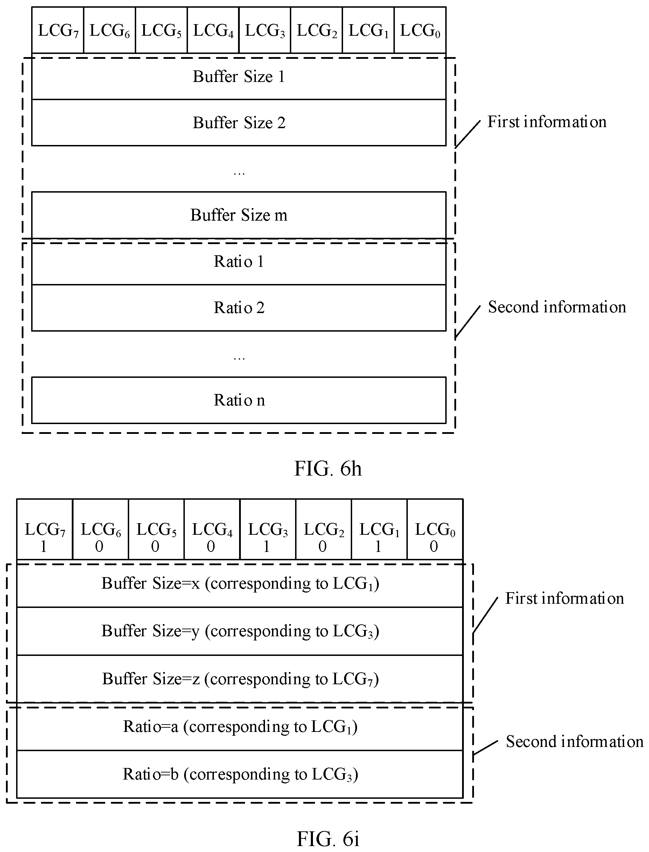

FIG. 6h shows an implementation example when the value of N is greater than 1. In this implementation example, an example in which the second information indicates the information G is used for description. Compared with that in the implementation process shown in FIG. 6f, as described in the foregoing format 2, the BSR may include a plurality of LCG ID fields, for example, eight fields from LCG0 to LCG7 shown in FIG. 6h, which respectively indicate eight LCGs. In addition, the BSR further includes the first information and the second information. For implementation of the first information, refer to FIG. 3b and related descriptions. The second information may include n fields from Ratio 1 to Ratio n (a value of n is 1 to 8) shown in FIG. 6h, which respectively indicate ratios corresponding to n LCGs. In other words, after receiving the BSR in Step S502, the network device can determine, based on the plurality of LCG ID fields, the plurality of LCGs respectively corresponding to the first information and the second information that are carried in the BSR.

Optionally, the quantity n of Ratio fields is equal to a quantity m of Buffer Size fields. In other words, a value of n (namely, the quantity of Ratio fields) is the same as a quantity of LCGs whose values are 1 in LCG fields and a quantity of reported Buffer Sizes. For example, when values of eight LCG fields indicate that the eight LCGs are all reported, m is equal to 8. For another example, when the values of the eight LCG fields indicate that less than eight LCGs are reported, m is less than 8. In addition, values of the n Ratio fields respectively indicate Ratios corresponding to the LCGs whose values are 1 in the LCG fields.

Optionally, the quantity n of Ratio fields is less than a quantity m of Buffer Size fields. In other words, a value of n (namely, the quantity of Ratio fields) is less than a quantity of LCGs whose values are 1 in the LCG fields. In other words, the value of n (namely, the quantity of Ratio fields) is less than a quantity of reported buffer sizes.

As shown in FIG. 6i, for example, the quantity n of Ratio fields is less than the quantity m of Buffer Size fields. The value of n is 2, and a value of m is 3. To be specific, the first information includes m Buffer Size fields, and the second information includes n Ratio fields. In FIG. 6i, when the values of the eight LCG fields indicate that an LCG1/LCG3/LCG7 is reported and other LCGs are not reported, the value of m is equal to 3. To be specific, a value of a first Buffer Size field is x (a buffered data amount corresponding to the LCG1 is x), a value of a second Buffer Size field is y (a buffered data amount corresponding to the LCG3 is y), and a value of a third Buffer Size field is z (a buffered data amount corresponding to the LCG7 is z). For a value of x/y/z, refer to Table 2 and related implementations. In addition, the quantity of Ratio fields is 2. It may be specified, through preconfiguration, that the n Ratio fields correspond to n LCGs with small LCG indexes. To be specific, a value of a first Ratio field is a (a ratio corresponding to the LCG1 is a), and a value of a second Ratio field is b (a ratio corresponding to the LCG3 is b). When Ratio in FIG. 6i corresponds to the information G, values of a and b may be less than 1, for example, 1/2, 1/4, or 1/8. For specific implementation, refer to the implementation of using the index value shown in Table 1 or Table 2.

Optionally, it may be specified in another manner that the n Ratio fields correspond to the n LCGs. For example, it may be specified, through preconfiguration, that the n Ratio fields correspond to n LCGs with large LCG indexes. For another example, the n LCGs corresponding to the n Ratio fields may be specified through dynamic configuration.

It should be noted that, in FIG. 6g, FIG. 6h, and FIG. 6i, an implementation process in which the second information indicates the information G is used as an example. When the value of N is 1 or the value of N is greater than 1, the second information may also indicate any one of the information A to the information F. For these implementations, refer to the implementation examples shown in FIG. 6g and FIG. 6h. Details are not described herein again.

It should be noted that, in the BSR format corresponding to any one of FIG. 6b to FIG. 6h, values of quantities of bytes (or quantities of bits) of different fields and an order of different fields are not limited. The values of the quantities of bytes (or the quantities of bits) of different fields and the order of different fields in the BSR format are merely an implementation example. The values of the quantities of bytes (or the quantities of bits) of the different fields in the BSR format may alternatively be other values, and the order of the different fields in the BSR format may alternatively be another field order. This is not limited herein. In addition, different fields in the BSR format may be independently implemented.

In a possible implementation, before Step S502 shown in FIG. 5, the method further includes: The terminal device receives first indication information, where the first indication information indicates that the reported BSR includes the second information. Specifically, the terminal device may further receive the first indication information indicating that the reported BSR includes the second information, so that the terminal device may use the reported BSR to carry the second information based on the first indication information. In this way, the terminal device reports the second information based on scheduling of the network device.

Optionally, the first indication information may be carried in a field in a downlink message/signaling/information. When a value of the field is a first value, a meaning of the field is the first indication information. When the value of the field is a second value, the meaning of the field may be second indication information, and the second indication information indicates that the reported BSR does not include the second information (or the second indication information indicates that the second information is prohibited from being carried in the reported BSR). For example, the first value is 1 and the second value is 0, or the first value is 0 and the second value is 1.

In addition, the first indication information may be carried in a radio resource control (radio resource control, RRC) message, downlink control information (downlink control information, DCI), a media access control control element (media access control control element, MAC CE), or the like. For example, the first indication information is included in BSR configuration (BSR-Config) information in the RRC message, that is, the first indication information may be a field in BSR-Config. For example, a name of the field may be "Forward error correction buffer state report enable (FEC-BSR-enable)" field. In addition, when a value of the FEC-BSR-enable field is 1, the field indicates that the reported BSR includes the second information, and when the value of the FEC-BSR-enable field is 0, the field indicates that the reported BSR does not include the second information.

In a possible implementation, the LCG corresponding to the BSR sent by the terminal device is used to carry a protocol data unit (protocol data unit, PDU). The data amount of the system information is a quantity of PDUs corresponding to the system information, and the data amount of the redundant information is a quantity of PDUs corresponding to the redundant information. Specifically, the LCG of the terminal device may be used to carry the PDU, and both the system information and the redundant information may include one or more PDUs. Correspondingly, the data amount that is of the system information and that is indicated by the second information (namely, the data amount of the system information in any one of the information A to the information G) may be the quantity of PDUs corresponding to the system information, and the data amount that is of the redundant information and that is indicated by the second information (namely, the data amount of the redundant information in any one of the information A to the information G) may be the quantity of PDUs corresponding to the redundant information.

Optionally, the LCG may carry buffered information in a plurality of manners. For example, the LCG may carry the buffered information in a form of PDU. Correspondingly, the system information in the LCG may include one or more PDUs, in other words, the data amount of the system information may be represented by using a quantity of PDUs included in the system information, that is, the data amount of the system information may be the quantity of PDUs corresponding to the system information. Similarly, the redundant information in the LCG may include one or more PDUs, in other words, the data amount of the redundant information may be represented by using a quantity of PDUs included in the redundant information, that is, the data amount of the redundant information may be the quantity of PDUs corresponding to the redundant information.

It should be understood that, in the one or more PDUs included in the system information in the LCG and in the one or more PDUs included in the redundant information in the LCG, sizes of different PDUs are equal or approximately equal.

In another possible implementation, the LCG corresponding to the BSR sent by the terminal device is used to carry a packet. The data amount of the system information is a quantity of packets corresponding to the system information, and the data amount of the redundant information is a quantity of packets corresponding to the redundant information. Specifically, the LCG of the terminal device may be used to carry the packet, and both the system information and the redundant information may include one or more packets. Correspondingly, the data amount that is of the system information and that is indicated by the second information (namely, the data amount of the system information in any one of the information A to the information G) may be the quantity of packets corresponding to the system information, and the data amount that is of the redundant information and that is indicated by the second information (namely, the data amount of the redundant information in any one of the information A to the information G) may be the quantity of packets corresponding to the redundant information.

Optionally, the LCG may carry buffered information in a plurality of manners. For example, the LCG may carry the buffered information in a form of packet. Correspondingly, the system information in the LCG may include one or more packets, in other words, the data amount of the system information may be represented by using a quantity of packets included in the system information, that is, the data amount of the system information may be the quantity of packets corresponding to the system information. Similarly, the redundant information in the LCG may include one or more packets, in other words, the data amount of the redundant information may be represented by using a quantity of packets included in the redundant information, that is, the data amount of the redundant information may be the quantity of packets corresponding to the redundant information.

It should be understood that, in the one or more packets included in the system information in the LCG and in the one or more packets included in the redundant information in the LCG, sizes of different packets are equal or approximately equal.

Optionally, the LCG may carry buffered information in a plurality of manners. In addition to the foregoing PDU and packet forms, the LCG may further carry the buffered information in another manner, for example, a symbol (symbol) or a data block (block). The symbol may be a symbol including several bits (bits), for example, an encoded symbol (encoded symbol).

Based on the technical solution shown in FIG. 5, the BSR reported by the terminal device in Step S502 includes the first information and the second information, the first information indicates the buffered data amount of the LCG, and the second information indicates any one of the foregoing items. Upon receiving the BSR, the network device may determine, based on the BSR, both the data amount of the system information in the LCG and the data amount of the redundant information in the LCG. Because the network device may be capable of recovering complete system information even if the terminal device does not send the redundant information, a resource indicated by a resource indication subsequently sent by the network device based on the BSR may not need to include a resource used to carry the redundant information. Compared with an approach in which the network device learns the buffered data amount of the LCG based on the BSR and performs uplink scheduling on buffered data of the LCG, the foregoing technical solutions, by having the terminal device send the BSR that includes the first information and the second information, enable the network device to determine both the data amount of the system information in the LCG and the data amount of the redundant information in the LCG based on the BSR, allowing it to schedule uplink transmission of the system information based on the BSR. This improves performance of BSR-based uplink scheduling.

In addition, because the network device may be capable of recovering the complete system information even if the terminal device does not send the redundant information, and considering the constraints of uplink resources, by having the terminal device send the BSR that includes the first information and the second information, the network device can avoid scheduling the resource used to carry the redundant information. This increases a quantity of terminal devices (or referred to as a quantity of users) scheduled by the network device based on the BSR, thereby improving multi-user scheduling performance.

In addition, because the network device may be capable of recovering the complete system information even if the terminal device does not send the redundant information, in the case of a high uplink transmission delay requirement, by having the terminal device send the BSR that includes the first information and the second information, the network device can avoid scheduling the resource used to carry the redundant information, thereby reducing uplink transmission delay.

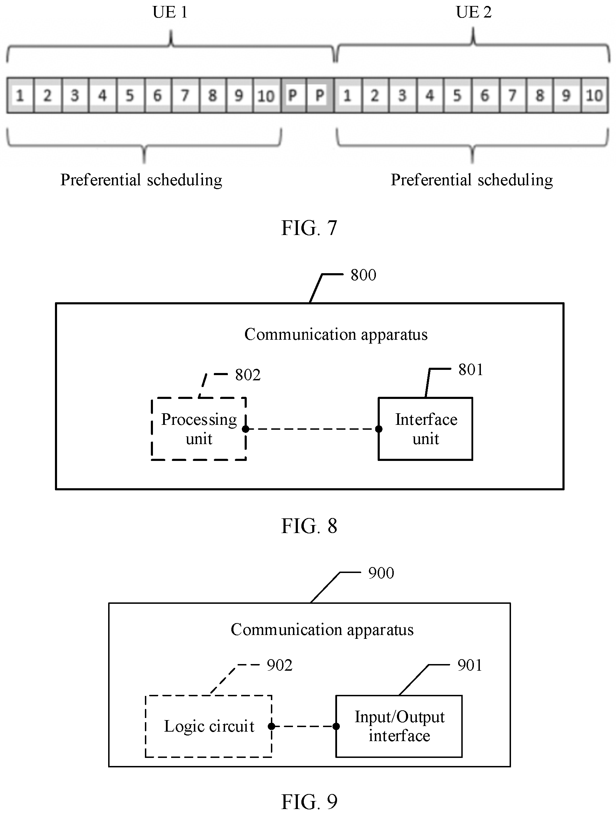

FIG. 7 shows an application example of the technical solution shown in FIG. 5. It is considered that, in an uplink process, when the network device determines that currently, there are only uplink resources of 20 packets, if the network device receives a BSR of UE 1 and a BSR of UE 2, and the BSR of the UE 1 indicates, in a conventional manner, that a quantity of packets buffered in an LCG of the UE 1 is 12 packets, in other words, a total quantity of system information and redundant information is 12 packets, the system information is represented by 10 packets that correspond to the UE 1 and that are numbered 1 to 10 in FIG. 7, and the redundant information is represented by two packets that correspond to the UE 1 and that are numbered P in FIG. 7. An XR scenario is used as an example. Based on an integrity requirement of a data frame, it needs to be ensured that a data frame is completely transmitted before being delivered to an application layer. This requires that integrity of a data frame is preferentially scheduled in a scheduling priority. Therefore, after scheduling transmission of 12 packets for the UE 1, the network device schedules uplink transmission of another UE. Therefore, after the network device schedules uplink resources of the 12 packets for the UE 1, uplink resources of the remaining eight packets cannot meet uplink transmission of the UE 2. As a result, an uplink resource cannot be allocated to the UE 2, and uplink transmission of the UE 2 cannot be met, affecting multi-user scheduling performance.

However, in an actual situation, if the system information is received, the system information can be correctly recovered through decoding. Therefore, the UE 1 may use the method shown in FIG. 5 to carry the first information and the second information, so that the network device may determine, based on the first information and the second information, that a data amount of system information of the UE 1 is 10 packets (namely, the 10 packets that correspond to the UE 1 and that are numbered 1 to 10 in FIG. 7), and determine that a data amount of redundant information of the UE 1 is two packets (namely, the two packets that correspond to the UE 1 and that are numbered P in FIG. 7). In this way, after preferentially scheduling uplink resources of the 10 packets for the UE 1, the network device may preferentially schedule uplink resources of the remaining 10 packets for the UE 2, to meet uplink transmission of the UE 2. In other words, the network device may determine, based on the BSR reported by the terminal device, the data amount of the system information in the LCG, allocate a scheduling resource accordingly, and adjust and optimize a scheduling strategy based on the data amount of the system information in the LCG during multi-user scheduling, to maximize system performance.

Refer to FIG. 8. An embodiment of this application provides a communication apparatus 800. The communication apparatus 800 includes at least an interface unit 801.

Optionally, the communication apparatus 800 further includes a processing unit 802.

It should be understood that the communication apparatus 800 may implement a function of any communication apparatus (for example, the terminal device or the network device) in the foregoing method embodiments. Therefore, beneficial effect of the foregoing method embodiments can also be implemented. In this embodiment of this application, the communication apparatus 800 may be any communication apparatus in the foregoing method embodiments, or may be an integrated circuit or an element in any communication apparatus in the foregoing method embodiments, for example, a chip.

In a possible implementation, when the apparatus 800 is configured to perform the method performed by the terminal device in FIG. 5 and the related embodiments thereof, the processing unit 802 is configured to generate a BSR, where the BSR includes first information and second information, the first information indicates a buffered data amount of an LCG, the buffered data amount of the LCG is related to a data amount of system information in the LCG and a data amount of redundant information in the LCG, and the redundant information is generated based on the system information. The second information indicates any one of the following: the data amount of the system information, the data amount of the redundant information, a ratio of the data amount of the system information to the buffered data amount of the LCG, a ratio of the data amount of the redundant information to the buffered data amount of the LCG, a ratio of the data amount of the system information to a sum of the data amount of the system information and the data amount of the redundant information, and a ratio of the data amount of the redundant information to the sum of the data amount of the system information and the data amount of the redundant information. The interface unit 801 is configured to report the BSR.

In a possible implementation, the LCG is used to carry a PDU, the data amount of the system information is a quantity of PDUs corresponding to the system information, and the data amount of the redundant information is a quantity of PDUs corresponding to the redundant information.

In a possible implementation, the LCG is used to carry a packet, the data amount of the system information is a quantity of packets corresponding to the system information, and the data amount of the redundant information is a quantity of packets corresponding to the redundant information.

In a possible implementation, there is one or more LCGs.

In a possible implementation, the interface unit 801 is further configured to receive first indication information, where the first indication information indicates that the reported BSR includes the second information.

In a possible implementation, the first indication information is included in BSR configuration information in an RRC message.

In another possible implementation, when the apparatus 800 is configured to perform the method performed by the network device in FIG. 5 and the related embodiments thereof, the interface unit 801 is configured to receive a BSR, where the BSR includes first information and second information, the first information indicates a buffered data amount of an LCG, the buffered data amount of the LCG is related to a data amount of system information in the LCG and a data amount of redundant information in the LCG, the redundant information is generated based on the system information, and the second information indicates any one of the following: the data amount of the system information, the data amount of the redundant information, a ratio of the data amount of the system information to the buffered data amount of the LCG, a ratio of the data amount of the redundant information to the buffered data amount of the LCG, a ratio of the data amount of the system information to a sum of the data amount of the system information and the data amount of the redundant information, and a ratio of the data amount of the redundant information to the sum of the data amount of the system information and the data amount of the redundant information.

In a possible implementation, the LCG is used to carry a PDU, the data amount of the system information is a quantity of PDUs corresponding to the system information, and the data amount of the redundant information is a quantity of PDUs corresponding to the redundant information.

In a possible implementation, the LCG is used to carry a packet, the data amount of the system information is a quantity of packets corresponding to the system information, and the data amount of the redundant information is a quantity of packets corresponding to the redundant information.

In a possible implementation, there is one or more LCGs.

In a possible implementation, the interface unit 801 is further configured to send first indication information, where the first indication information indicates that the reported BSR includes the second information.

In a possible implementation, the first indication information is included in BSR configuration information in an RRC message.

It should be noted that, for content such as an information execution process of a unit of the communication apparatus 800 and corresponding technical effect, refer to the descriptions in the foregoing method embodiments of this application. Details are not described herein again.

FIG. 9 is another diagram of a structure of a communication apparatus 900 according to this application. The communication apparatus 900 includes at least an input/output interface 901. The communication apparatus 900 may be a chip or an integrated circuit.

Optionally, the communication apparatus further includes a logic circuit 902.

The interface unit 801 shown in FIG. 8 may be a communication interface. The communication interface may be the input/output interface 901 in FIG. 9, and the input/output interface 901 may include an input interface and an output interface. Alternatively, the communication interface may be a transceiver circuit, and the transceiver circuit may include an input interface circuit and an output interface circuit.

The logic circuit 902 and the input/output interface 901 may perform the method performed by any communication apparatus (for example, the terminal device or the network device) in the foregoing method embodiments, and implement corresponding beneficial effect. Details are not described herein again.

In a possible implementation, the processing unit 802 shown in FIG. 8 may be the logic circuit 902 in FIG. 9.

Optionally, the logic circuit 902 may be a processing apparatus, and some or all functions of the processing apparatus may be implemented by using software. Some or all functions of the processing apparatus may be implemented by using software.

Optionally, the processing apparatus may include a memory and a processor. The memory is configured to store a computer program, and the processor reads and executes the computer program stored in the memory, to perform corresponding processing and/or steps in any method embodiment.

Optionally, the processing apparatus may include only processor. The memory configured to store computer program is located outside the processing apparatus, and the processor is connected to the memory through a circuit/wire, to read and execute the computer program stored in the memory. The memory and the processor may be integrated together, or may be physically independent of each other.

Optionally, the processing apparatus may be one or more chips or one or more integrated circuits. For example, the processing apparatus may be one or more field-programmable gate arrays (field-programmable gate arrays, FPGAs), application-specific integrated circuits (application-specific integrated circuits, ASICs), system on chips (system on chips, SoCs), central processing units (central processing units, CPUs), network processors (network processors, NPs), digital signal processors (digital signal processors, DSPs), microcontroller units (microcontroller units, MCUs), programmable logic devices (programmable logic devices, PLDs), other integrated chips, any combination of the foregoing chips or processors.

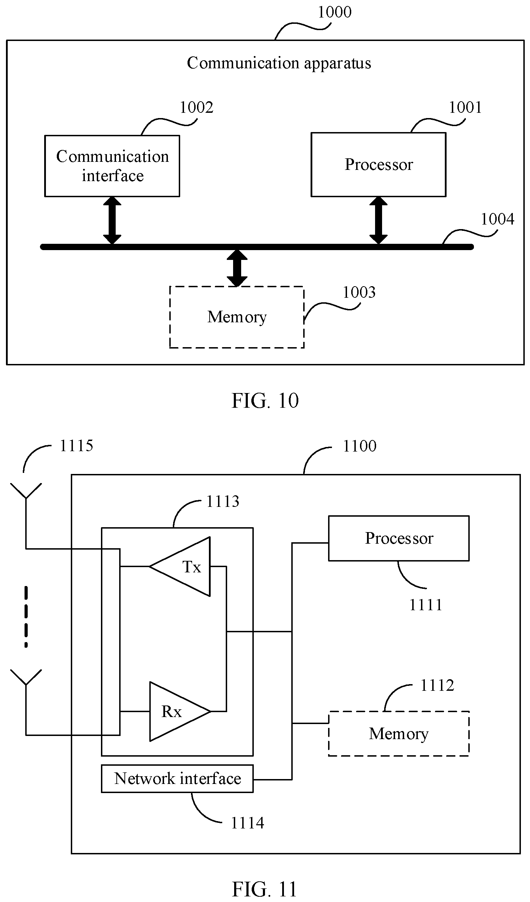

FIG. 10 shows a communication apparatus 1000 in the foregoing embodiments according to an embodiment of this application. The communication apparatus 1000 may be specifically the communication apparatus used as the terminal device in the foregoing embodiments.

In a diagram of a possible logical structure of the communication apparatus 1000, the communication apparatus 1000 may include but is not limited to at least one processor 1001 and a communication interface 1002.

Further optionally, the apparatus may include at least one of a memory 1003 and a bus 1004. In this embodiment of this application, the at least one processor 1001 is configured to control an action of the communication apparatus 1000.

In addition, the processor 1001 may be a central processing unit, a general-purpose processor, a digital signal processor, an application-specific integrated circuit, a field-programmable gate array or another programmable logic device, a transistor logic device, a hardware component, or any combination thereof. The processor may implement or execute various example logical blocks, modules, and circuits described with reference to content disclosed in this application. Alternatively, the processor may be a combination of processors implementing a computing function, for example, a combination of one or more microprocessors, or a combination of a digital signal processor and a microprocessor. It may be clearly understood by a person skilled in the art that, for the purpose of convenient and brief description, for a detailed working process of the foregoing system, apparatus, and unit, refer to a corresponding process in the foregoing method embodiments, and details are not described herein again.

It should be noted that the communication apparatus 1000 shown in FIG. 10 may be specifically configured to implement the steps implemented by the terminal device in the foregoing method embodiments, and achieve technical effect corresponding to the terminal device. For a specific implementation of the communication apparatus shown in FIG. 10, refer to the descriptions in the foregoing method embodiments. Details are not described herein again.

FIG. 11 is a diagram of a structure of a communication apparatus in the foregoing embodiments according to an embodiment of this application. The communication apparatus may be specifically the network device in the foregoing embodiments. For a structure of the communication apparatus, refer to the structure shown in FIG. 11.

The communication apparatus includes at least one processor 1111 and at least one network interface 1114.

Optionally, the communication apparatus further includes at least one memory 1112, at least one transceiver 1113, and one or more antennas 1115. The processor 1111, the memory 1112, the transceiver 1113, and the network interface 1114 are connected, for example, connected through a bus. In this embodiment of this application, the connection may include various interfaces, transmission lines, buses, or the like. This is not limited in this embodiment. The antenna 1115 is connected to the transceiver 1113. The network interface 1114 is configured to enable the communication apparatus to communicate with another communication device through a communication link. For example, the network interface 1114 may include a network interface between the communication apparatus and a core network device, for example, an S1 interface. The network interface may include a network interface between the communication apparatus and another communication apparatus (for example, another network device or core network device), for example, an X2 or Xn interface.

The processor 1111 is mainly configured to: process a communication protocol and communication data, control the entire communication apparatus, execute a software program, and process data of the software program, for example, is configured to support the communication apparatus in performing actions described in embodiments. The communication apparatus may include a baseband processor and a central processing unit. The baseband processor is mainly configured to process the communication protocol and the communication data. The central processing unit is mainly configured to control an entire terminal device, execute the software program, and process the data of the software program. Functions of the baseband processor and the central processing unit may be integrated into the processor 1111 in FIG. 11. A person skilled in the art can understand that the baseband processor and the central processing unit may alternatively be processors independent of each other, and are interconnected through a technology like a bus. Persons skilled in the art may understand that the terminal device may include a plurality of baseband processors to adapt to different network standards, and the terminal device may include a plurality of central processing units to enhance processing capabilities of the terminal device, and components of the terminal device may be connected by using various buses. The baseband processor may also be expressed as a baseband processing circuit or a baseband processing chip. The central processing unit may also be expressed as a central processing circuit or a central processing chip. A function of processing the communication protocol and the communication data may be built in the processor, or may be stored in the memory in a form of a software program, and the processor executes the software program to implement a baseband processing function.

The memory is mainly configured to store the software program and data. The memory 1112 may exist independently, and is connected to the processor 1111. Optionally, the memory 1112 and the processor 1111 may be integrated together, for example, integrated into one chip. The memory 1112 can store program code for performing the technical solutions in embodiments of this application, and execution of the program code is controlled by the processor 1111. Various types of executed computer program code may also be considered as a driver of the processor 1111.

FIG. 11 shows only one memory and one processor. In an actual terminal device, there may be a plurality of processors and a plurality of memories. The memory may also be referred to as a storage medium, a storage device, or the like. The memory may be a storage element on a same chip as the processor, that is, an on-chip storage element, or may be an independent storage element. This is not limited in this embodiment of this application.

The transceiver 1113 may be configured to support receiving or sending of a radio frequency signal between the communication apparatus and a terminal. The transceiver 1113 may be connected to the antenna 1115. The transceiver 1113 includes a transmitter Tx and a receiver Rx. Specifically, the one or more antennas 1115 may receive a radio frequency signal. The receiver Rx of the transceiver 1113 is configured to receive the radio frequency signal from the antenna, convert the radio frequency signal into a digital baseband signal or a digital intermediate frequency signal, and provide the digital baseband signal or the digital intermediate frequency signal for the processor 1111, so that the processor 1111 further processes the digital baseband signal or the digital intermediate frequency signal, for example, performs demodulation and decoding. In addition, the transmitter Tx of the transceiver 1113 is further configured to receive a modulated digital baseband signal or digital intermediate frequency signal from the processor 1111, convert the modulated digital baseband signal or digital intermediate frequency signal into a radio frequency signal, and send the radio frequency signal through the one or more antennas 1115. Specifically, the receiver Rx may selectively perform one-level or multi-level down mixing processing and analog-to-digital conversion processing on the radio frequency signal, to obtain the digital baseband signal or the digital intermediate frequency signal. A sequence of the down mixing processing and the analog-to-digital conversion processing may be adjusted. The transmitter Tx may selectively perform one-level or multi-level up mixing processing and digital-to-analog conversion processing on the modulated digital baseband signal or digital intermediate frequency signal, to obtain the radio frequency signal. A sequence of the up mixing processing and the digital-to-analog conversion processing may be adjusted. The digital baseband signal and the digital intermediate frequency signal may be collectively referred to as a digital signal.

The transceiver 1113 may also be referred to as an interface unit, a transceiver unit, a transceiver machine, a transceiver apparatus, an interface module, or the like. Optionally, a component that is in the interface unit and that is configured to implement a receiving function may be considered as a receiving unit, and a component that is in the interface unit and that is configured to implement a sending function may be considered as a sending unit. That is, the interface unit includes the receiving unit and the sending unit. The receiving unit may also be referred to as a receiver, an input interface, a receiver circuit, or the like. The sending unit may be referred to as a transmitting device, a transmitter, a transmitter circuit, or the like.

It should be noted that the communication apparatus shown in FIG. 11 may be specifically configured to implement steps implemented by the network device in the foregoing method embodiments, and achieve technical effect corresponding to the network device. For specific implementation of the communication apparatus shown in FIG. 11, refer to the descriptions in the foregoing method embodiments. Details are not described herein again.

An embodiment of this application further provides a computer-readable storage medium. The computer-readable storage medium is configured to store one or more computer-executable instructions. When the computer-executable instructions are executed by a computer, the processor performs the method according to any possible implementation of the communication apparatus (for example, the terminal device or the network device) in the foregoing method embodiments.

An embodiment of this application further provides a computer program product (or referred to as a computer program), including instructions. When the instructions in the computer program product are executed by a processor, the processor performs the method according to any possible implementation of the communication apparatus (for example, the terminal device or the network device) in the foregoing method embodiments.

An embodiment of this application further provides a chip system. The chip system includes at least one processor, configured to implement functions in any possible implementation of the communication apparatus (for example, the terminal device or the network device) in the foregoing method embodiments.

Optionally, the chip system further includes an interface circuit, and the interface circuit provides program instructions and/or data for the at least one processor. In a possible design, the chip system may further include a memory. The memory is configured to store program instructions and data that are necessary for the terminal device. The chip system may include a chip, or may include a chip and another discrete component.

In a possible design, the chip system may further include a memory. The memory is configured to store program instructions and data that are necessary for any communication apparatus in the foregoing method embodiments. The chip system may include a chip, or may include a chip and another discrete component.

An embodiment of this application further provides a communication system. An architecture of the network system includes the terminal device and the network device in any one of the foregoing embodiments.

In the several embodiments provided in this application, it should be understood that the disclosed system, apparatus, and method may be implemented in other manners. For example, the apparatus embodiment described above is an example. For example, the unit division is logical function division. There may be another division manner during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected according to actual requirements to achieve the objectives of the solutions in embodiments.

In addition, functional units in embodiments of this application may be integrated into one processing module, or each of the units may exist alone physically, or two or more units are integrated into one unit. The integrated unit may be implemented in a form of hardware, or may be implemented in a form of a software functional unit. When the integrated unit is implemented in the form of the software functional unit and sold or used as an independent product, the integrated unit may be stored in a computer-readable storage medium. Based on such an understanding, the technical solutions in this application essentially, the part contributing, or all or some of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The storage medium includes any medium that can store program code, such as a USB flash drive, a removable hard disk, a read-only memory (ROM, Read-Only Memory), a random access memory (RAM, Random Access Memory), a magnetic disk, or an optical disc.

The foregoing descriptions are merely specific implementations of embodiments of this application, but are not intended to limit the protection scope of embodiments of this application. Any variation or replacement readily figured out by a person skilled in the art within the technical scope disclosed in embodiments of this application shall fall within the protection scope of embodiments of this application. Therefore, the protection scope of embodiments of this application shall be subject to the protection scope of the claims.

**Claims**

1. A communication method, comprising:
generating a buffer state report BSR, wherein the BSR comprises first information and second information, the first information indicates a buffered data amount of a logical channel group LCG, the buffered data amount of the LCG is related to a data amount of system information in the LCG and a data amount of redundant information in the LCG, the redundant information is generated based on the system information, and the second information indicates any one of the following:

the data amount of the system information, the data amount of the redundant information, a ratio of the data amount of the system information to the buffered data amount of the LCG, a ratio of the data amount of the redundant information to the buffered data amount of the LCG, a ratio of the data amount of the system information to a sum of the data amount of the system information and the data amount of the redundant information, and a ratio of the data amount of the redundant information to the sum of the data amount of the system information and the data amount of the redundant information; and
reporting the BSR.

2. The method according to claim 1, wherein the LCG is used to carry a protocol data unit PDU, the data amount of the system information is a quantity of PDUs corresponding to the system information, and the data amount of the redundant information is a quantity of PDUs corresponding to the redundant information.

3. The method according to claim 1, wherein the LCG is used to carry a packet, the data amount of the system information is a quantity of packets corresponding to the system information, and the data amount of the redundant information is a quantity of packets corresponding to the redundant information.

4. The method according to any one of claims 1 to 3, wherein there is one or more LCGs.

5. The method according to any one of claims 1 to 4, wherein the method further comprises:
receiving first indication information, wherein the first indication information indicates that the reported BSR comprises the second information.

6. The method according to claim 5, wherein the first indication information is comprised in BSR configuration information in a radio resource control RRC message.

7. A communication method, comprising:
receiving a buffer state report BSR, wherein the BSR comprises first information and second information, the first information indicates a buffered data amount of a logical channel group LCG, the buffered data amount of the LCG is related to a data amount of system information in the LCG and a data amount of redundant information in the LCG, the redundant information is generated based on the system information, and the second information indicates any one of the following:
the data amount of the system information, the data amount of the redundant information, a ratio of the data amount of the system information to the buffered data amount of the LCG, a ratio of the data amount of the redundant information to the buffered data amount of the LCG, a ratio of the data amount of the system information to a sum of the data amount of the system information and the data amount of the redundant information, and a ratio of the data amount of the redundant information to the sum of the data amount of the system information and the data amount of the redundant information.

8. The method according to claim 7, wherein the LCG is used to carry a protocol data unit PDU, the data amount of the system information is a quantity of PDUs corresponding to the system information, and the data amount of the redundant information is a quantity of PDUs corresponding to the redundant information.

9. The method according to claim 7, wherein the LCG is used to carry a packet, the data amount of the system information is a quantity of packets corresponding to the system information, and the data amount of the redundant information is a quantity of packets corresponding to the redundant information.

10. The method according to any one of claims 7 to 9, wherein there is one or more LCGs.

11. The method according to any one of claims 7 to 10, wherein the method further comprises:
sending first indication information, wherein the first indication information indicates that the reported BSR comprises the second information.

12. The method according to claim 11, wherein the first indication information is comprised in BSR configuration information in an RRC message.

13. A communication apparatus, comprising a processing unit and an interface unit, wherein
the processing unit is configured to generate a buffer state report BSR, wherein the BSR comprises first information and second information, the first information indicates a buffered data amount of a logical channel group LCG, the buffered data amount of the LCG is related to a data amount of system information in the LCG and a data amount of redundant information in the LCG, the redundant information is generated based on the system information, and the second information indicates any one of the following:

the data amount of the system information, the data amount of the redundant information, a ratio of the data amount of the system information to the buffered data amount of the LCG, a ratio of the data amount of the redundant information to the buffered data amount of the LCG, a ratio of the data amount of the system information to a sum of the data amount of the system information and the data amount of the redundant information, and a ratio of the data amount of the redundant information to the sum of the data amount of the system information and the data amount of the redundant information; and
the interface unit is configured to report the BSR.

14. The apparatus according to claim 13, wherein the LCG is used to carry a protocol data unit PDU, the data amount of the system information is a quantity of PDUs corresponding to the system information, and the data amount of the redundant information is a quantity of PDUs corresponding to the redundant information.

15. The apparatus according to claim 13, wherein the LCG is used to carry a packet, the data amount of the system information is a quantity of packets corresponding to the system information, and the data amount of the redundant information is a quantity of packets corresponding to the redundant information.

16. The apparatus according to any one of claims 13 to 15, wherein there is one or more LCGs.

17. The apparatus according to any one of claims 13 to 16, wherein the interface unit is further configured to receive first indication information, wherein the first indication information indicates that the reported BSR comprises the second information.

18. The apparatus according to claim 17, wherein the first indication information is comprised in BSR configuration information in an RRC message.

19. A communication apparatus, comprising an interface unit, wherein
the interface unit is configured to receive a buffer state report BSR, wherein the BSR comprises first information and second information, the first information indicates a buffered data amount of a logical channel group LCG, the buffered data amount of the LCG is related to a data amount of system information in the LCG and a data amount of redundant information in the LCG, the redundant information is generated based on the system information, and the second information indicates any one of the following:
the data amount of the system information, the data amount of the redundant information, a ratio of the data amount of the system information to the buffered data amount of the LCG, a ratio of the data amount of the redundant information to the buffered data amount of the LCG, a ratio of the data amount of the system information to a sum of the data amount of the system information and the data amount of the redundant information, and a ratio of the data amount of the redundant information to the sum of the data amount of the system information and the data amount of the redundant information.

20. The apparatus according to claim 19, wherein the LCG is used to carry a protocol data unit PDU, the data amount of the system information is a quantity of PDUs corresponding to the system information, and the data amount of the redundant information is a quantity of PDUs corresponding to the redundant information.

21. The apparatus according to claim 19, wherein the LCG is used to carry a packet, the data amount of the system information is a quantity of packets corresponding to the system information, and the data amount of the redundant information is a quantity of packets corresponding to the redundant information.

22. The apparatus according to any one of claims 19 to 21, wherein there is one or more LCGs.

23. The apparatus according to any one of claims 19 to 22, wherein the interface unit is further configured to send first indication information, wherein the first indication information indicates that the reported BSR comprises the second information.

24. The apparatus according to claim 23, wherein the first indication information is comprised in BSR configuration information in an RRC message.

25. A communication apparatus, comprising at least one processor, wherein the at least one processor is coupled to a memory; and the at least one processor is configured to execute instructions in the memory, so that the apparatus performs the method according to any one of claims 1 to 6.

26. A communication apparatus, comprising at least one processor, wherein the at least one processor is coupled to a memory; and the at least one processor is configured to execute instructions in the memory, so that the apparatus performs the method according to any one of claims 7 to 12.

27. A computer-readable storage medium, wherein the storage medium stores a computer program or instructions; and when the computer program or the instructions are executed by a communication apparatus, the method according to any one of claims 1 to 6 is implemented, or the method according to any one of claims 7 to 12 is implemented.

28. A computer program product, wherein when a computer program in the computer program product is executed by a computer, the method according to any one of claims 1 to 6 is implemented, or the method according to any one of claims 7 to 12 is implemented.

29. A communication system, comprising the apparatus according to any one of claims 13 to 18 and the apparatus according to any one of claims 19 to 24.

FIG. 1

A video frame is divided into dozens of IP packets for transmission

Server ← Fixed network/Core network ← RAN ← Terminal device

FIG. 2a

UE

| SDAP |
| PDCP |
| RLC |
| MAC |
| PHY |

gNB

| SDAP |
| PDCP |
| RLC |
| MAC |
| PHY |

FIG. 2b

FIG. 2c

FIG. 2d

| LCG ID | Buffer Size | | Oct 1 |

FIG. 3a

| LCG$_7$ | LCG$_6$ | LCG$_5$ | LCG$_4$ | LCG$_3$ | LCG$_2$ | LCG$_1$ | LCG$_0$ | Oct 1 |
| Buffer Size 1 | | | | | | | | Oct 2 |
| Buffer Size 2 | | | | | | | | Oct 3 |

...

| Buffer Size m | Oct m+1 |

FIG. 3b

$Y^{(K+R)\times 1}$     $A^{(K+R)\times K}$     $X^{K\times 1}$

Encoded data     Coding coefficient matrix     Original data

FIG. 4a

FIG. 4b

FIG. 5

FIG. 6a

FIG. 6b

First information

Second information

| Buffer Size | Data amount of system information | Data amount of redundant information |

FIG. 6c

First information

Second information

| Buffer Size | Data amount of system information | Sum of the data amount of the system information and a data amount of redundant information |

FIG. 6d

First information

Second information

| Buffer Size | Data amount of redundant information | Sum of a data amount of system information and the data amount of the redundant information |

FIG. 6e

First information    Second information

| Buffer Size | Ratio |

FIG. 6f

First information    Second information

| LCG ID | Buffer Size | Ratio |

FIG. 6g

| LCG$_7$ | LCG$_6$ | LCG$_5$ | LCG$_4$ | LCG$_3$ | LCG$_2$ | LCG$_1$ | LCG$_0$ |
|---------|---------|---------|---------|---------|---------|---------|---------|

Buffer Size 1

Buffer Size 2 — First information

...

Buffer Size m

Ratio 1

Ratio 2 — Second information

...

Ratio n

FIG. 6h

| LCG$_7$ 1 | LCG$_6$ 0 | LCG$_5$ 0 | LCG$_4$ 0 | LCG$_3$ 1 | LCG$_2$ 0 | LCG$_1$ 1 | LCG$_0$ 0 |
|-----------|-----------|-----------|-----------|-----------|-----------|-----------|-----------|

Buffer Size=x (corresponding to LCG$_1$)

Buffer Size=y (corresponding to LCG$_3$) — First information

Buffer Size=z (corresponding to LCG$_7$)

Ratio=a (corresponding to LCG$_1$)

Ratio=b (corresponding to LCG$_3$) — Second information

FIG. 6i

UE 1                                          UE 2

| 1 | 2 | 3 | 4 | 5 | 6 | 7 | 8 | 9 | 10 | P | P | 1 | 2 | 3 | 4 | 5 | 6 | 7 | 8 | 9 | 10 |

Preferential scheduling                      Preferential scheduling

FIG. 7

800

Communication apparatus

802                                          801

Processing unit - - - - - - - - Interface unit

FIG. 8

900

Communication apparatus

902                                          901

Logic circuit - - - - - Input/Output interface

FIG. 9

1000

Communication apparatus

1002

Communication interface

1001

Processor

1004

1003

Memory

FIG. 10

1115

1100

1113

Tx

Processor

1111

1112

Rx

Memory

Network interface

1114

FIG. 11

**EP 4 765 940 A1**

<table>
<tr><td colspan="2">INTERNATIONAL SEARCH REPORT</td><td colspan="2">International application No.<br><br>**PCT/CN2024/113514**</td></tr>
</table>

**A. CLASSIFICATION OF SUBJECT MATTER**

H04W28/02(2009.01)i

According to International Patent Classification (IPC) or to both national classification and IPC

**B. FIELDS SEARCHED**

Minimum documentation searched (classification system followed by classification symbols)

IPC:H04W,H04L,H04Q

Documentation searched other than minimum documentation to the extent that such documents are included in the fields searched

Electronic data base consulted during the international search (name of data base and, where practicable, search terms used)

CNTXT; ENTXT; ENTXTC; WPABS; WPABSC; 3GPP; CJFD: 缓存状态报告, 缓冲状态报告, 缓冲器状态报告, 缓存器状态报告, 数据量, 数据总量, 逻辑信道组, 冗余, 系统信息, BSR, data volume, data size, amount of data, buffer state report, buffer status report, LCG, system information, SI, redundancy

**C. DOCUMENTS CONSIDERED TO BE RELEVANT**

| Category* | Citation of document, with indication, where appropriate, of the relevant passages | Relevant to claim No. |
|---|---|---|
| A | CN 115866580 A (ZTE CORP.) 28 March 2023 (2023-03-28)<br>entire document | 1-29 |
| A | CN 107360591 A (CHINA ACADEMY OF TELECOMMUNICATIONS TECHNOLOGY) 17 November 2017 (2017-11-17)<br>entire document | 1-29 |
| A | CN 112106325 A (HUAWEI TECHNOLOGIES CO., LTD.) 18 December 2020 (2020-12-18)<br>entire document | 1-29 |
| A | US 2022070722 A1 (TELEFONAKTIEBOLAGET LM ERICSSON (PUBL)) 03 March 2022 (2022-03-03)<br>entire document | 1-29 |

☐ Further documents are listed in the continuation of Box C. ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **01 November 2024** | **04 November 2024** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/113514**

| Patent document cited in search report | | | Publication date (day/month/year) | Patent family member(s) | | | Publication date (day/month/year) |
|---|---|---|---|---|---|---|---|
| CN | 115866580 | A | 28 March 2023 | None | | | |
| CN | 107360591 | A | 17 November 2017 | WO | 2018228035 | A1 | 20 December 2018 |
| | | | | TW | 201906359 | A | 01 February 2019 |
| | | | | TWI | 681654 | B | 01 January 2020 |
| CN | 112106325 | A | 18 December 2020 | None | | | |
| US | 2022070722 | A1 | 03 March 2022 | US | 11864022 | B2 | 02 January 2024 |
| | | | | WO | 2020126018 | A1 | 25 June 2020 |
| | | | | EP | 3900428 | A1 | 27 October 2021 |
| | | | | EP | 3900428 | B1 | 24 April 2024 |

Form PCT/ISA/210 (patent family annex) (July 2022)

**REFERENCES CITED IN THE DESCRIPTION**

**Patent documents cited in the description**

- CN 202311323296